# EUROPEAN PATENT SPECIFICATION

(11) **EP 1 856 439 B1**
(45) Date of publication and mention of the grant of the patent: **02.03.2011**
(21) Application number: 06728480.2
(22) Date of filing: 10.03.2006
(51) Int. Cl.: F16M 11/10

(54) **MOUNTING SYSTEM FOR A HOUSEHOLD APPLIANCE**
MONTAGESYSTEM FÜR EIN HAUSHALTSGERÄT
SYSTEME DE MONTAGE POUR APPAREIL MENAGER

(30) Priority: 11.03.2005 IT BS20050031; 14.06.2005 IT VR20050079
(43) Date of publication of application: 21.11.2007
(73) Proprietor: OMB S.R.L., I-38040 Stenico (IT)
(72) Inventor: BAILO, Elio, I-38070 Stenico (IT); OMEZZOLI, Enrico, I-38060 Nago (IT)
(74) Representative: Crippa, Paolo Ernesto
(86) International application number: PCT/IT2006/000144
(87) International publication number: WO 2006/095379

(56) References cited:
- US-A- 3 894 451
- US-A1- 2002 033 436
- US-S1- D 494 596

## Description

The present invention relates to a mounting system, particularly but not exclusively for television sets but also for household appliances in general. Mounting system are known by US2002/033436 A1 and US D 494 596 S1.

It is a further object of the present invention a mounting system for a device, such as a television screen, a monitor, a CRT monitor, an LCD monitor, a flat screen and the like.

The mounting system, in particular, is a tilting mounting and support system for angularly orientating the device as desired.

Known mounting systems for a device that allow tilting and positioning a device in a steady balanced position exhibit two brackets, turnably associated, wherein one of the two brackets exhibits arched grooves inside which there slide two pins or "sliding blocks", for allowing the device oscillating movement about the centre of rotation defined by the arched grooves and wherein there are locking means for fixing the device in a steady position, at the desired tilt.

Examples of tilting mounting and support systems for screens and displays are, for example, described in document W02004063619 and in document US20040245420.

However, in order to be adjusted, such supports require a single operator to intervene to remove the device from the support and then manually adjust the tilt by acting on the locking means and on the supports, or two operators to intervene at the same time, one of which acting on the locking means, loosening them, adjusting the desired tilt and then closing the locking means again, while the other one sustains the device so as to prevent it from suddenly sliding during the operation for adjusting the position thereof, for example in the case of an accidental knock.

On the market there are also further different types of mounting systems used for fixing television sets, especially with flat screen, to the walls.

Such structures generally consist of an mounting support, fixable to the wall, and of an element for supporting the television set; in order to allow the suitable orientation of the television set there are usually provided means for adjusting the tilt of the mounting structure, relative to the anchoring element and thus, relative to the wall.

Typically, the mounting structure is turnably supported to the mounting structure about an oscillation axis (generally a horizontal axis parallel to the wall itself) whereas various types of locking devices act for locking the mounting structure to the desired position.

Among the mounting systems, in particular, the so-called "continuous adjustment" ones are known, wherein on one of the two elements there is provided a circular development groove whereas on the other one there is provided a pin sliding into the groove and lockable, by the use of various devices, along such groove. Examples of such structures are described, for example, in the U.S.A. ornamental model No. US D 494,596 S by Pfister or in the Japanese patent application No. 11330547 by Fujitsu General Ltd.

Alternatively, always among continuous adjustment structures, some of them exist which exhibit, at the mounting structure, one or more rectilinear slits which are slidingly engaged by a pin mounted on a respective connecting rod turnably coupled to the mounting support also these types of structures, of course, must be associated to relative locking means between the two elements. Among the various mounting systems exhibiting such gears we may mention those described in U.S.A. patents No. US 6,402,109 by Dittmer and No. US 6,604,722 by Tan.

Mounting Systems are further known, wherein it is possible to adjust in a "discrete" manner the tilt between the two elements by using a kinematic connection similar to that described and illustrated in the U.S.A. patent application No. U5 2002/0033436 A1 by Peng et al.

All the structures described above, despite being valid from a conceptual point of view, exhibit the disadvantage of forcing the user, if he/she wants to change the relative tilt between the mounting support and the mounting structure, to release the relative locking means and at the same time move the television set, or the mounting structure, to move it to the selected position to lock the locking means again. If the concurrent performance of these two operations is in any case possible, though difficult, in the case of small-sized television sets, if the mounting system is associated to television sets (or to objects in general) of large size and weight, this is virtually impossible with the consequence that two people are required to change the tilt of the object supported, in practice: one that releases (and then re-locks) the locking means between the mounting structure and the mounting support, and a second person that changes the relative tilt (by moving the supported object or, directly, the mounting structure itself).

The object of the present invention is to provide a mounting system for a device, such as a television screen, a monitor, a CRT monitor, an LCD monitor, a flat screen and the like, which should overcome the disadvantages mentioned with reference to the prior art.

Moreover, a main task of the present invention is to eliminate or at least drastically reduce the disadvantages mentioned above in known types of mounting systems, particularly but not exclusively for television sets.

In particular, within this task, an object of the present invention is to provide a mounting system which should allow changing the relative tilt between the mounting support and the mounting structure in a simple and effective manner.

Last but not least, an object of the finding is to conceive a mounting system exhibiting a competitive production cost, so that the use thereof may be advantageous also from the economic point of view.

Such objects are achieved by a structure manufactured according to the following claim 1. The dependent claims describe embodiment variations.

Further features and advantages of the invention will appear more clearly from the description of some preferred but non-exclusive embodiments of a mounting system, particularly but not exclusively for television sets according to the invention, illustrated by way of a non-limiting example in the annexed figures, wherein:

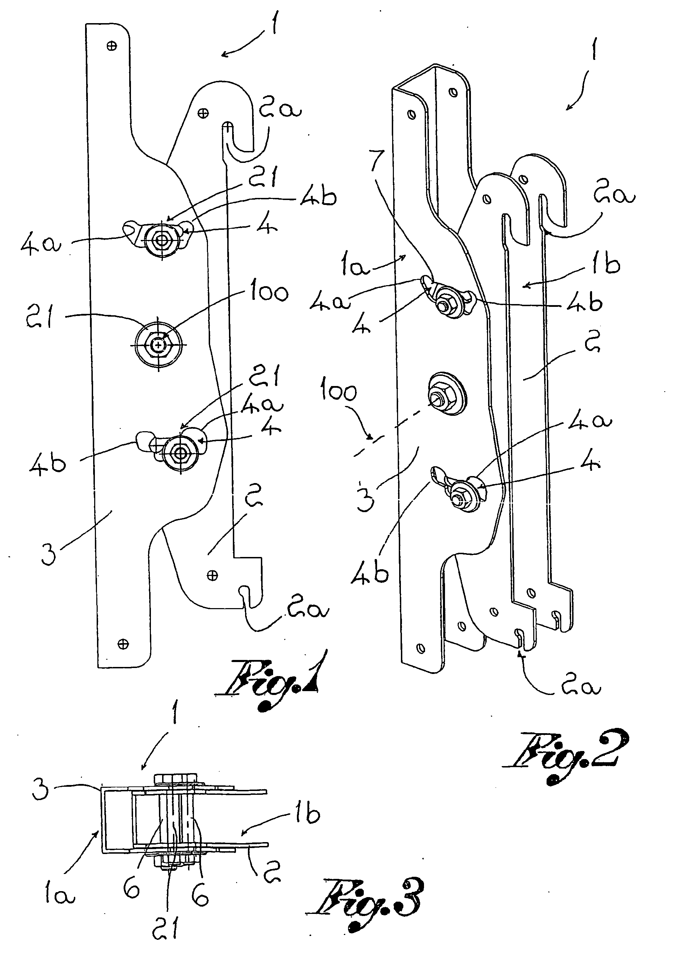

Figure 1 shows a side elevation view of a mounting system according to the present finding;

Figure 2 shows a perspective view of the mounting system illustrated in Figure 1;

Figure 3 shows an elevation top view of the mounting system shown in Figures 1 and 2;

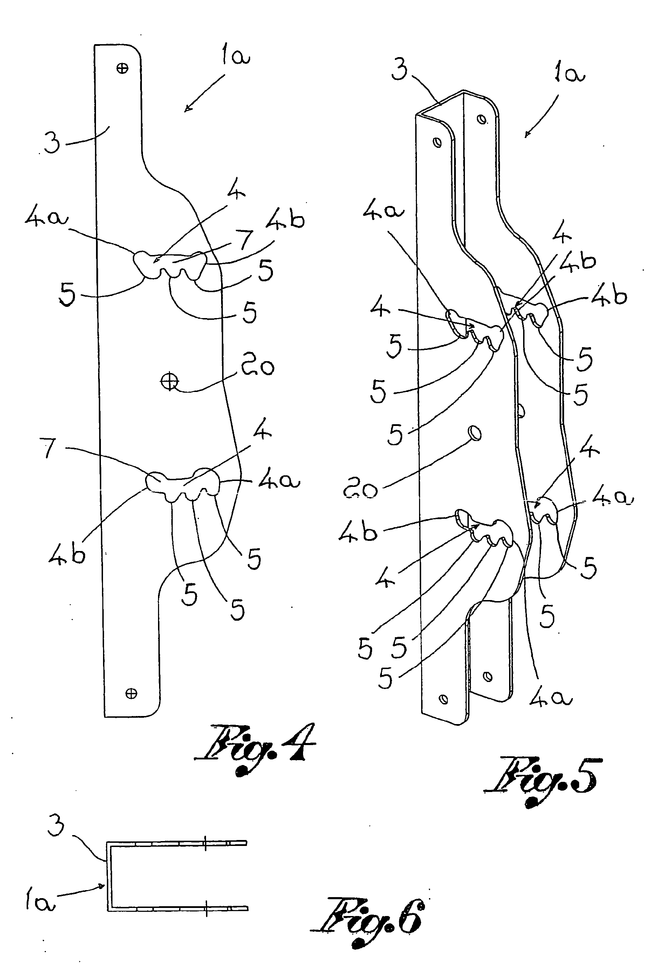

Figure 4 shows a side elevation view of a mounting structure;

Figure 5 shows a perspective view of the mounting structure illustrated in Figure 4;

Figure 6 shows an elevation top view of the mounting structure shown in Figures 4 and 5;

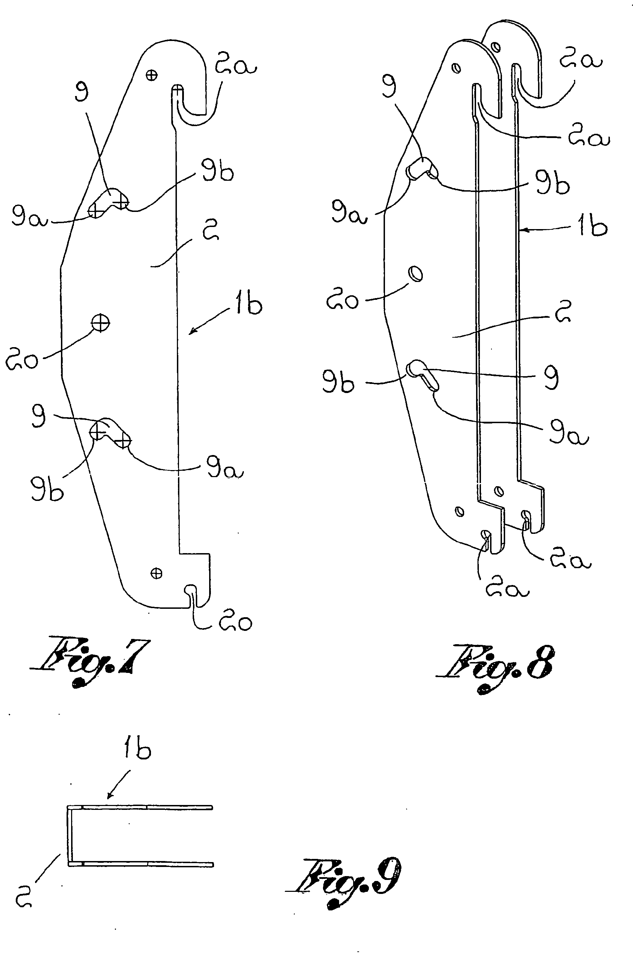

Figure 7 shows a side elevation view of the mounting support;

Figure 8 shows a perspective view of mounting support illustrated in Figure 1;

Figure 9 shows an elevation top view of the mounting support shown in Figures 7 and 8;

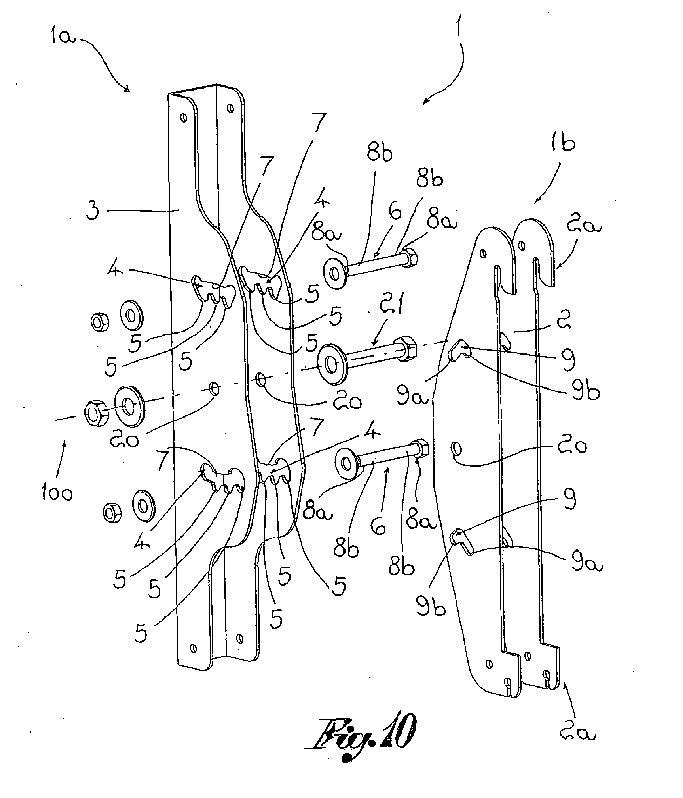

Figure 10 shows a perspective exploded view of a mounting system according to the present finding;

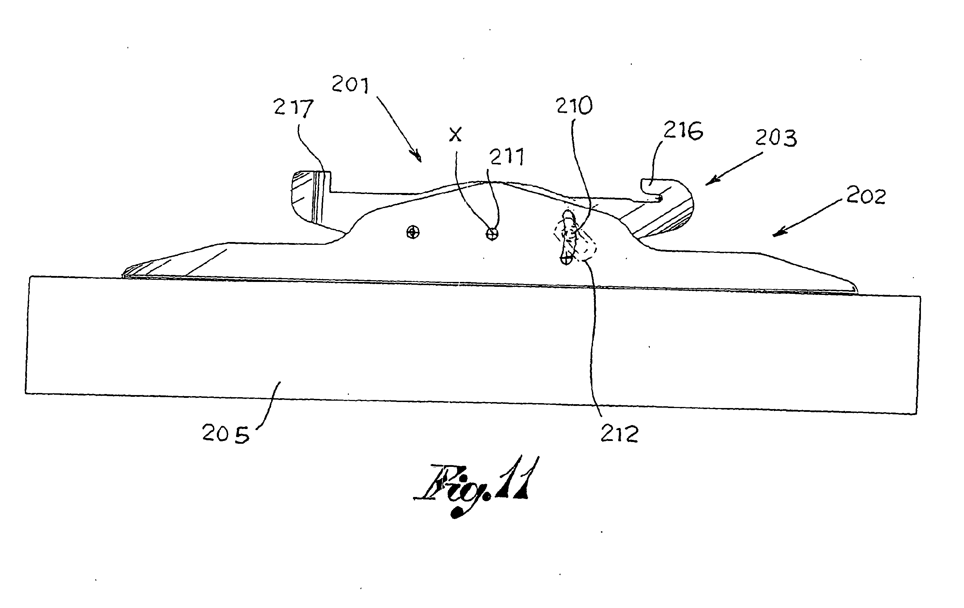

Figure 11 shows a side view of a mounting system for a device, according to the present invention;

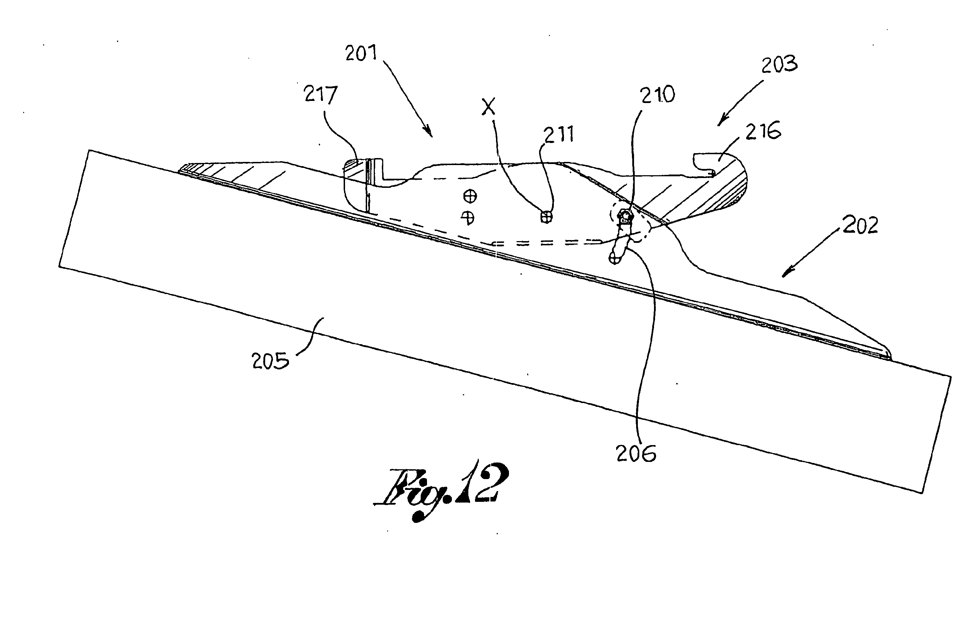

Figure 12 shows a further side view of the mounting system of Figure 11, tilted;

Figure 13 shows a detail of the mounting system of Figure 12, in engaged position;

Figure 14 shows a detail of the mounting system of Figure 12, in disengaged position;

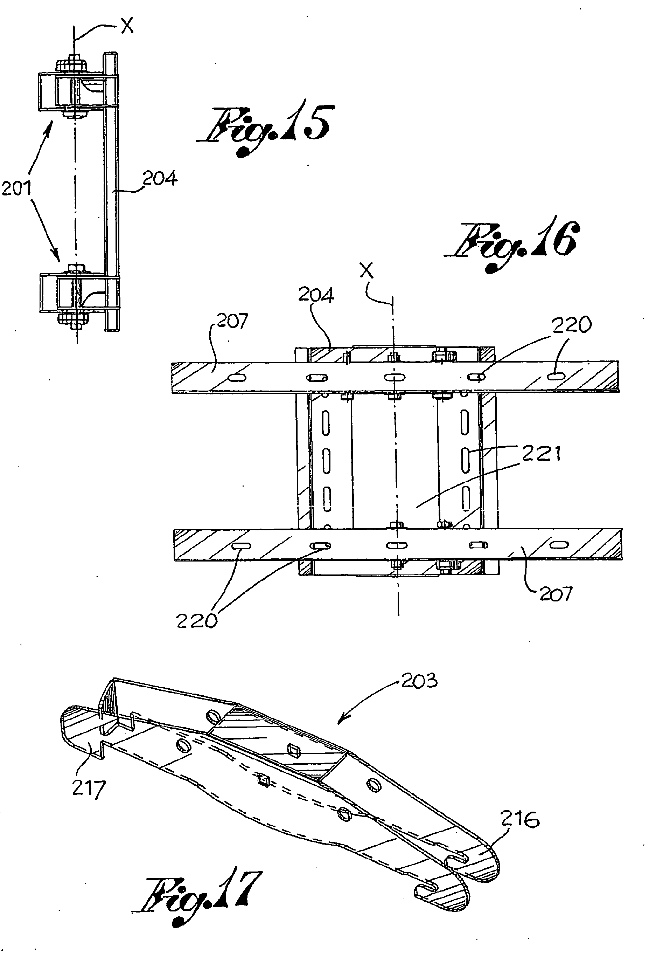

Figure 15 shows a bottom view of the mounting system of Figure 11 associated to a support interface;

Figure 16 shows a front view of the mounting system of Figure 15;

Figure 17 shows a three-dimensional view of a mounting support of the mounting system of Figure 11;

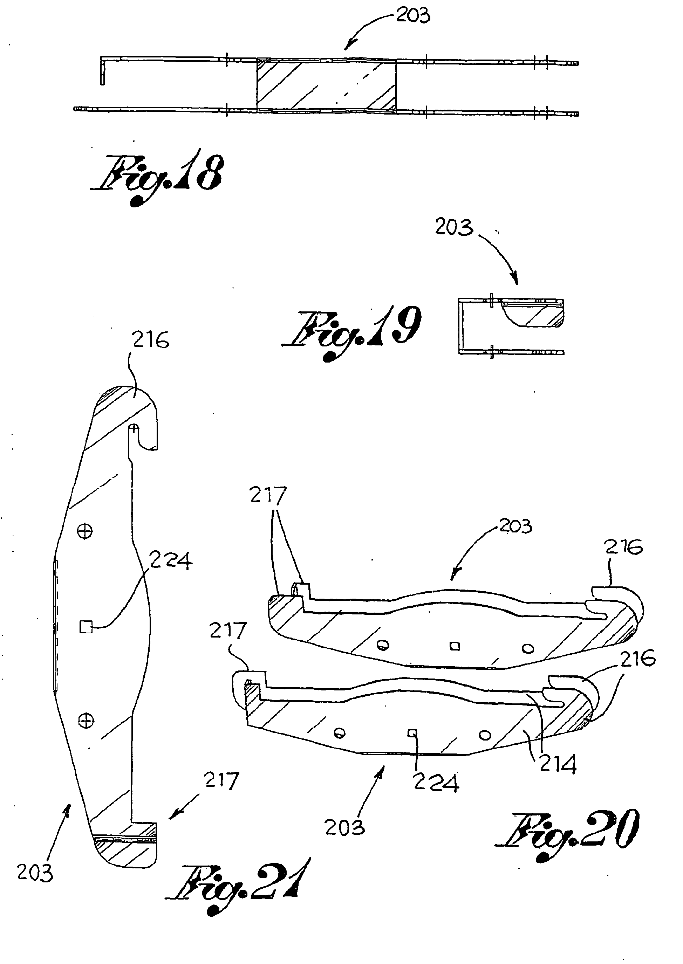

Figure 18 shows a bottom view of the support of Figure 17;

Figure 19 shows a side view of the support of Figure 17;

Figure 20 shows a three-dimensional view of supports of Figure 17;

Figure 21 shows a side view of a support of Figure 17;

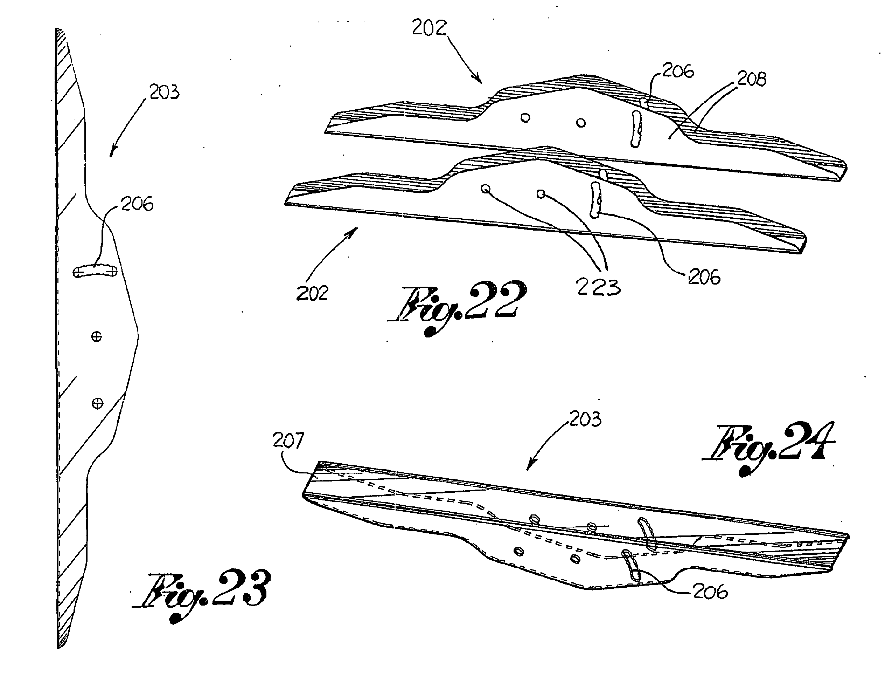

Figure 22 shows a three-dimensional view of a mounting structure of the mounting system of Figure 21;

Figure 23 shows a front view of the structure of Figure 22;

Figure 24 shows a further three-dimensional view of the structure of Figure 22;

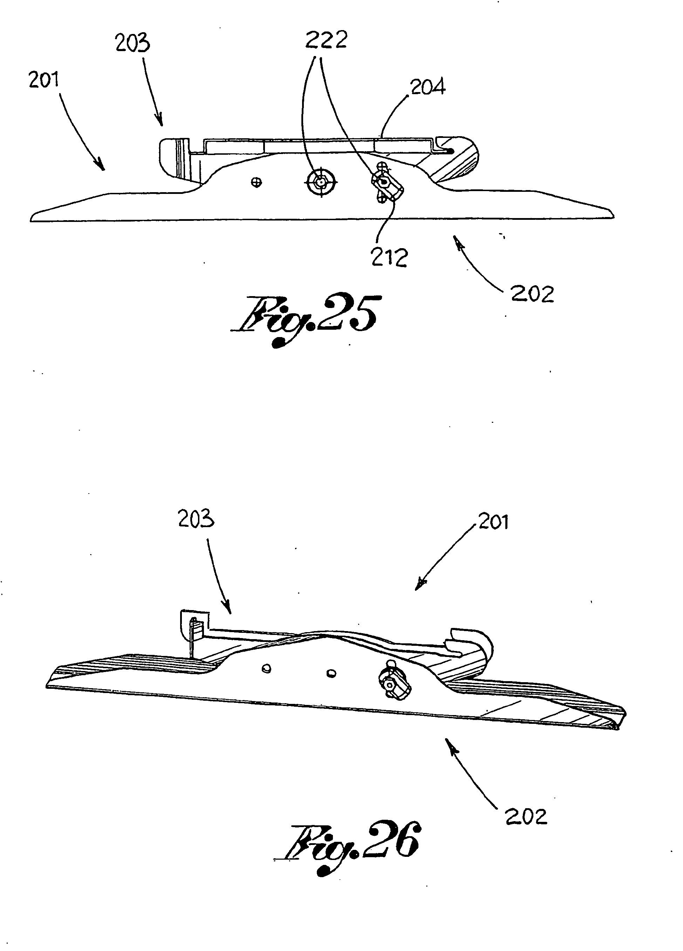

Figure 25 shows a front view of the mounting system of Figure 15;

Figure 26 shows a front view of the mounting system of Figure 11;

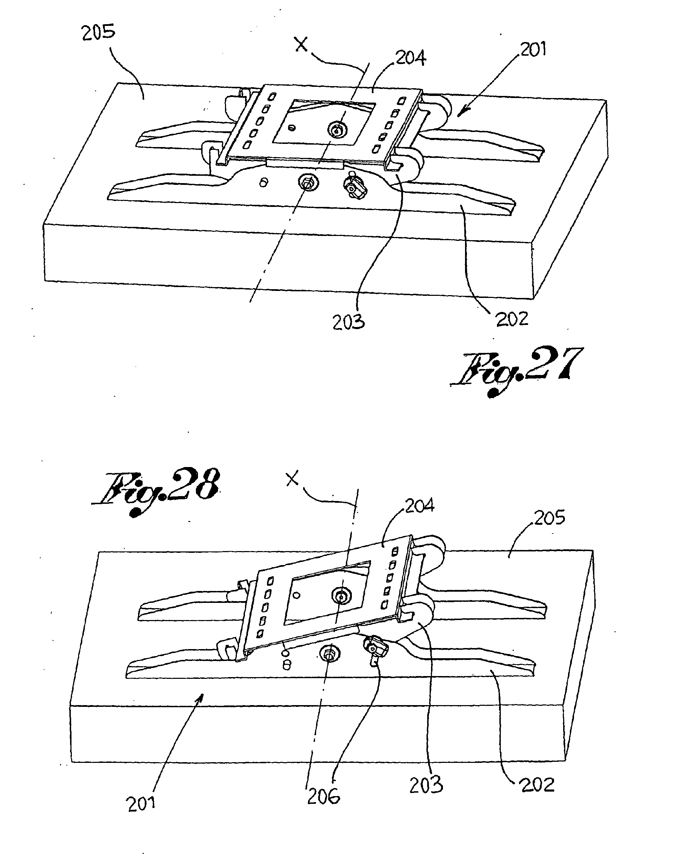

Figure 27 shows a three-dimensional view of the mounting system of Figure 11 associated to a support interface and to a device;

Figure 28 shows a three-dimensional view of the mounting system of Figure 27, tilted;

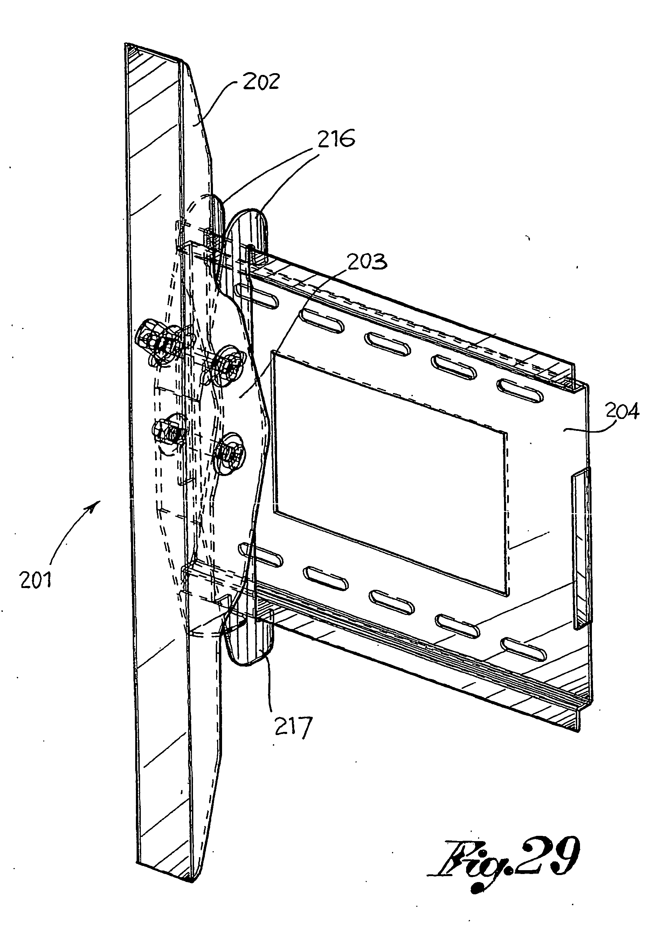

Figure 29 shows a further three-dimensional view of the mounting system of Figure 11 associated to a support interface;

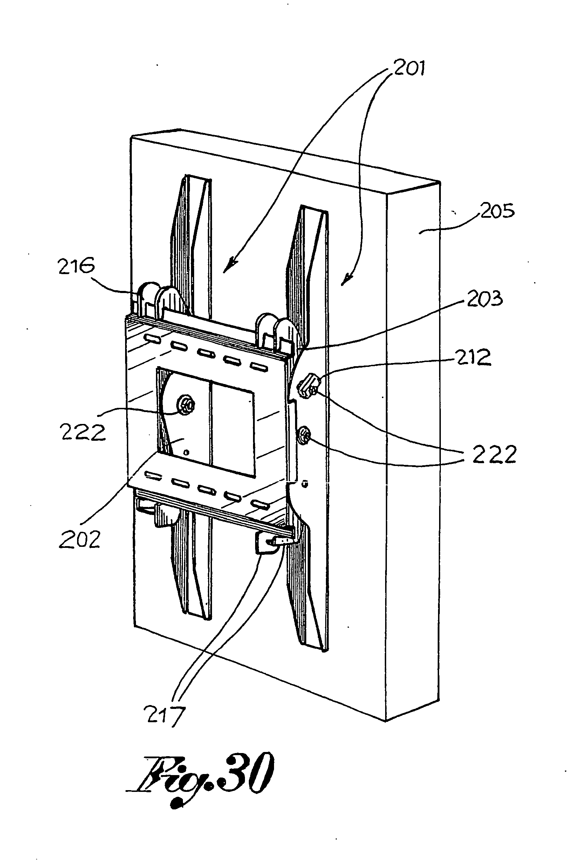

Figure 30 shows a further three-dimensional view of the mounting system of Figure 11 associated to a support interface and to a device;

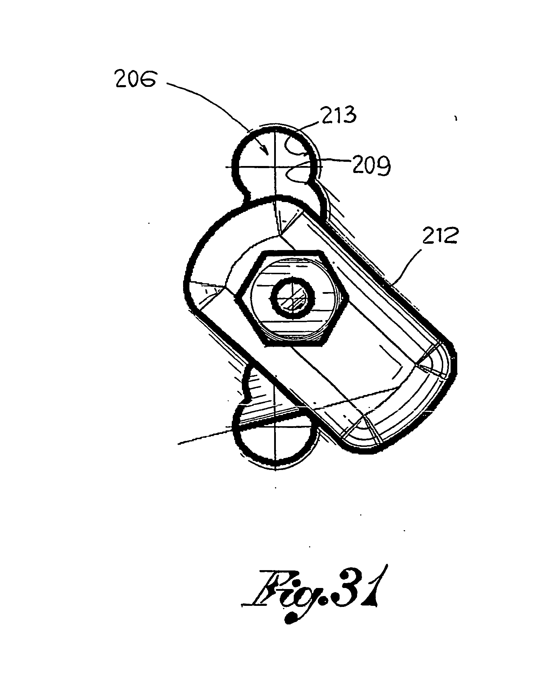

Figure 31 shows a detail of the mounting system of Figure 25;

Figure 32 shows a front view of an optional embodiment of a mounting system for a device;

Figure 33 shows a back view of the optional embodiment of Figure 32;

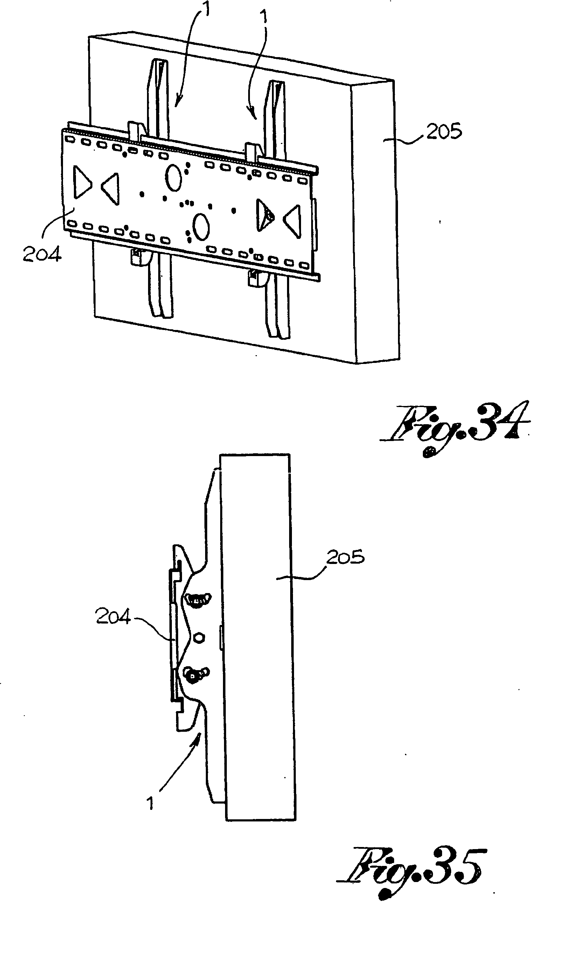

Figure 34 shows an axonometric view of a device mounted on a pair of mounting systems fixed to a support interface;

Figure 35 shows a side view of the assembly of Figure 34;

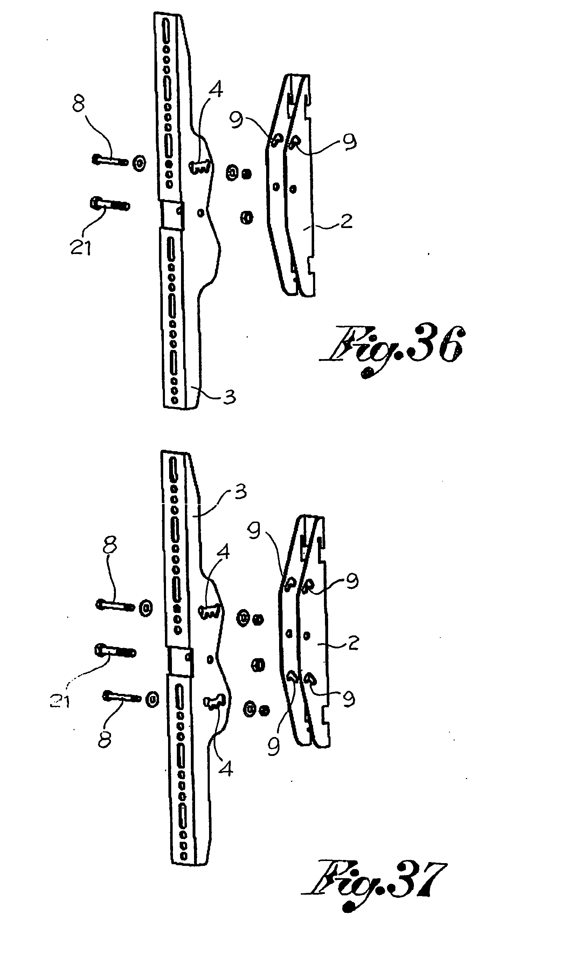

Figure 36 shows an axonometric exploded view of a mounting system according to a further embodiment, wherein there are provided guides, or engagement portions, suitable for allowing the oscillation, arranged on only one side of the system relative to the oscillation axis;

Figure 37 shows an axonometric exploded view of a mounting system according to an even further embodiment, wherein there are provided guides suitable for allowing the oscillation, arranged on both sides of the system relative to the oscillation axis;

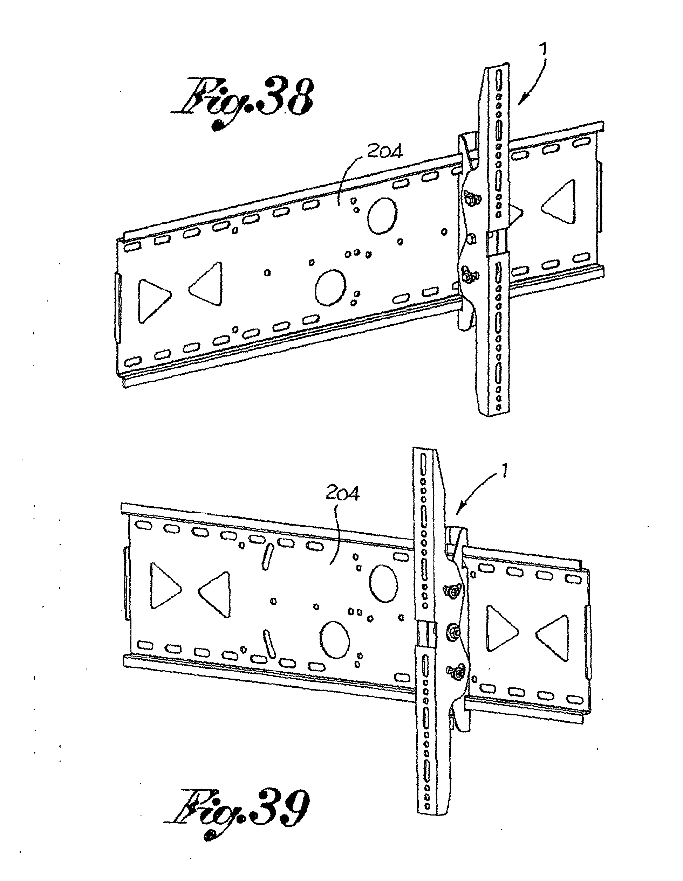

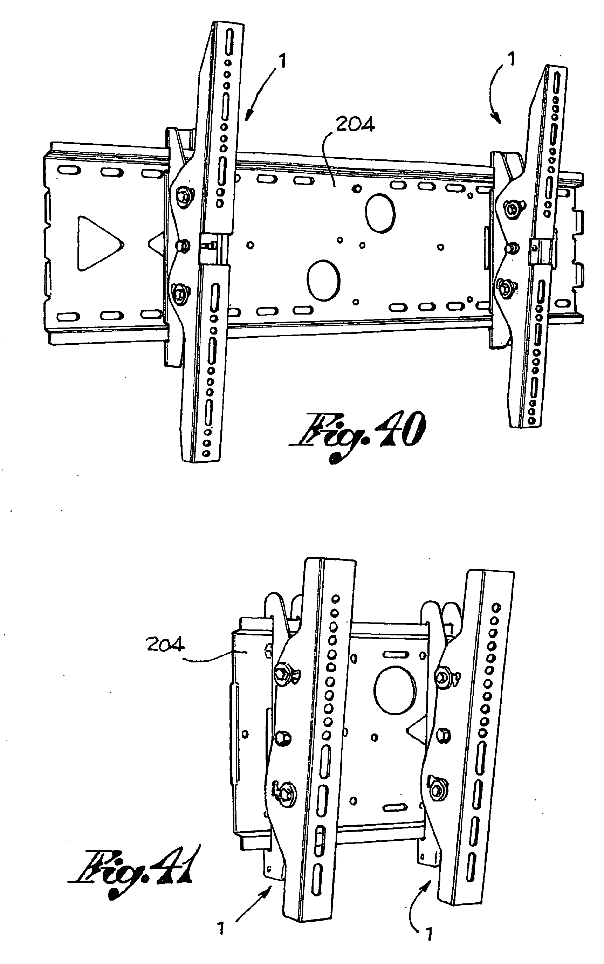

Figures 38 to 41 show four axonometric views of different mounting systems connected to respective support interfaces;

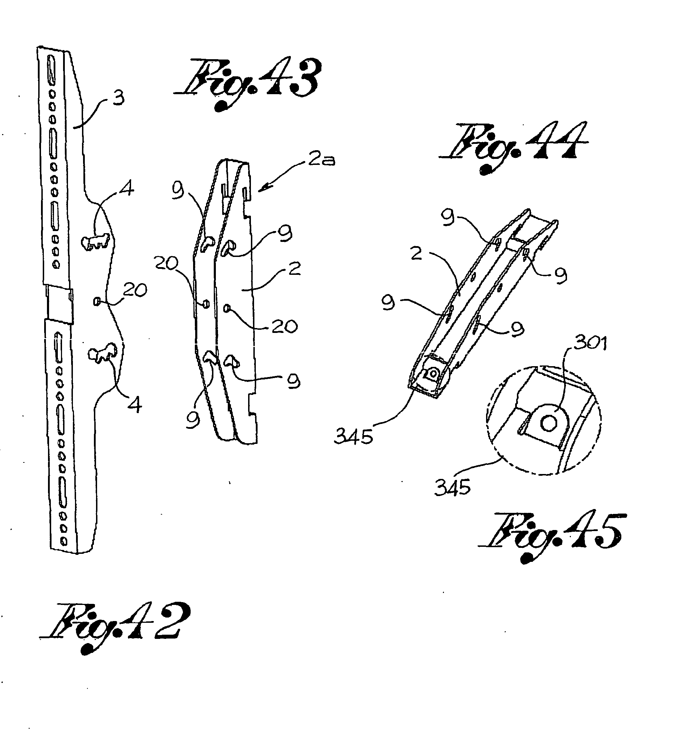

Figure 42 shows an axonometric view of a mounting structure;

Figure 43 shows an axonometric view of a mounting support connectable to the mounting structure of Figure 42;

Figures 44 and 45 show an axonometric view of a mounting support according to a further embodiment and a detail of said support relating to a shelf thereof with seat for seating removable locking means to a support interface;

Figures 46 and 47 show an axonometric exploded view of a mounting step of two mounting systems to a device and a detail of the mounting step;

Figures 48 to 50 show axonometric exploded views of three different mounting steps of a mounting system according to the invention;

Figures 51 to 56 show side exploded views of a mounting system and four details relating to lock and release portions or collimation windows of an mounting support and to engagement portions or guides with engagement grooves of a mounting structure;

Figures 57 to 59 show side views of a mounting system and details thereof of the lock and release portions or collimation windows facing the engagement portions or guides;

Figures 60 and 61 show side views of two mounting steps of a mounting system to a support interface;

Figures 62 and 63 show axonometric views of a locking step of the mounting system to a support interface and a detail of the locking means seated in the relevant shelf with seat of the mounting support

Figures 64 to 66 show side views of a mounting system and details thereof of the facing guides and collimation windows with the seated locking element;

Figures 67 and 68 show side views of a device mounted on a mounting system fixed to a support interface and of a detail of connection thereof to the support interface;

Figures 69 and 70 show side views of two oscillation positions of a mounting system.

As can be seen in the figures listed above, in accordance with a general embodiment of the invention, there is provided a mounting system 1; 201 for a device 205 such as a household appliance, a monitor, a television screen, a flat screen. Said mounting system 1; 201 is suitable for allowing a predetermined oscillation of said device 205 about an axis 100; X passing through said mounting system 1; 201, for the positioning in one of a plurality of predetermined balance positions of said device 205. Said mounting system 1; 201 comprises at least one mounting structure 3; 202 suitable for integrally connecting said device 205 to said mounting system 1; 201 in a selectively removable manner.

Said system further comprises a mounting support 2; 203 for integrally fixing said mounting system 1; 201 to a support interface 204 in a selectively removable manner, said support 2; 203 being pivoted along said axis 100; X to said mounting structure 3; 202 so that said mounting structure 3; 202 is tilting relative to said support by an oscillation about said axis 100; X.

Advantageously, said mounting structure 3; 202 comprises coupling means comprising at least one guide 4; 206 suitable for allowing said oscillation of said mounting structure 3; 202 about said axis 100; X.

In the following examples of embodiments, single features described with reference to specific examples may actually be interchanged with other different features, existing in other examples of embodiments.

With reference to the Figures mentioned above, a mounting system, in particular but not exclusively for supporting television sets, household appliances and the like, globally indicated with reference numeral 1, comprises two portions, 1a and 1b.

According to the embodiment illustrated in the Figures, the portion denoted by reference numeral 1a consists of an mounting support 2 while that denoted by reference numeral 1b consists of a mounting structure 3.

Of course, nothing prevents portion 1a from consisting of the mounting structure 3 and, consequently, portion 1b from consisting of the mounting support 2.

The two portions 1a and 1b are turnably articulated about an oscillation axis 100; in particular, in the case of mounting systems for television sets, the oscillation axis 100 lays on a substantially horizontal plane.

Suitably, on both portions 1a and 1b there may be provided one or more holes 20 to this end, engageable by a pin 21 developing along a development direction substantially corresponding to the oscillation axis 100.

At portion 1a of the mounting system 1 there is provided at least one guide or guiding window or also engagement portion 4 which defines at least two seats or engagement grooves 5.

The engagement grooves 5 are shaped so as to allow seating a locking element 6 (or also a portion of the above locking element 6) which is, for example, supported also by the other portion 1b of the mounting system 1.

In particular, by moving the two portions 1a, 1b along a first relative moving direction about the oscillation axis 100, the locking element 6 is suitable for engaging in a sequence, and in a steady manner (and automatically), the engagement grooves 5 defined along the engagement portion 4 whereas by moving the two portions 1a and 1b along the other (or the second) relative moving direction (from one end 4a towards the other end 4b of the engagement portion 4), the locking element 6 is suitable for moving in a disengagement condition relative to the engagement grooves 5 along the engagement portion 4.

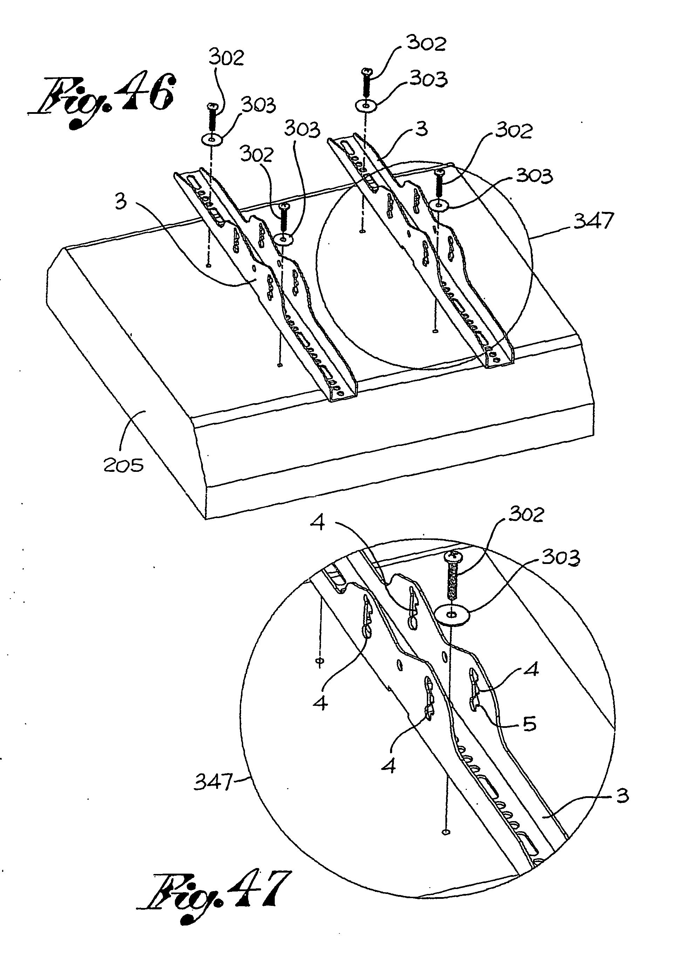

In accordance with an embodiment, the mounting support 2 is fixable, by first fixing means consisting, for example, of the slits with substantially vertical development 2a, to a structural element (such as a wall or a bearing structure) whereas the mounting structure 3 is fixable, by second fixing means (such as by screw/nut screw coupling 302 with optional washers 303 or spacers, or nut and bolt; Figures 46 and 47), to an object to be supported such as a household appliance, a work surface or, preferably, a flat plasma or LCD television set.

In accordance with an embodiment, the engagement portion 4 extends along an arc or circumference portion centred at the oscillation axis 100.

Suitably, the (or each) engagement portion 4 comprises a respective sliding portion within which the locking element 6 slides when the relative moving between the two portions 1a and 1b occurs along the second moving direction and thus, when the locking element 6 is disengaged relative to the engagement grooves 5.

With special reference to the embodiment illustrated in the Figures, in use, the above sliding portion 7 is arranged on top of the engagement grooves 5.

In accordance with an embodiment, engagement grooves 5 are shaped as ratchet gears (for example, with shaped sides reclined in one direction) so as to steadily hold the seated portion of locking element 6 in one direction and allow the passing over in the opposite direction.

It is advantageous to provide for the locking element 6 to consist of a pin element 8 which exhibits a first engagement element 8a (consisting for example of one or both end portions of the pin element 8) slidingly associated to the engagement portion 4 defined on one of the two portions 1a and a second engagement element 8b slidingly supported by a collimation window or lock-release portion 9 defined on the other portion 1b of the mounting system 1 and, advantageously, arranged substantially facing a respective engagement portion 4.

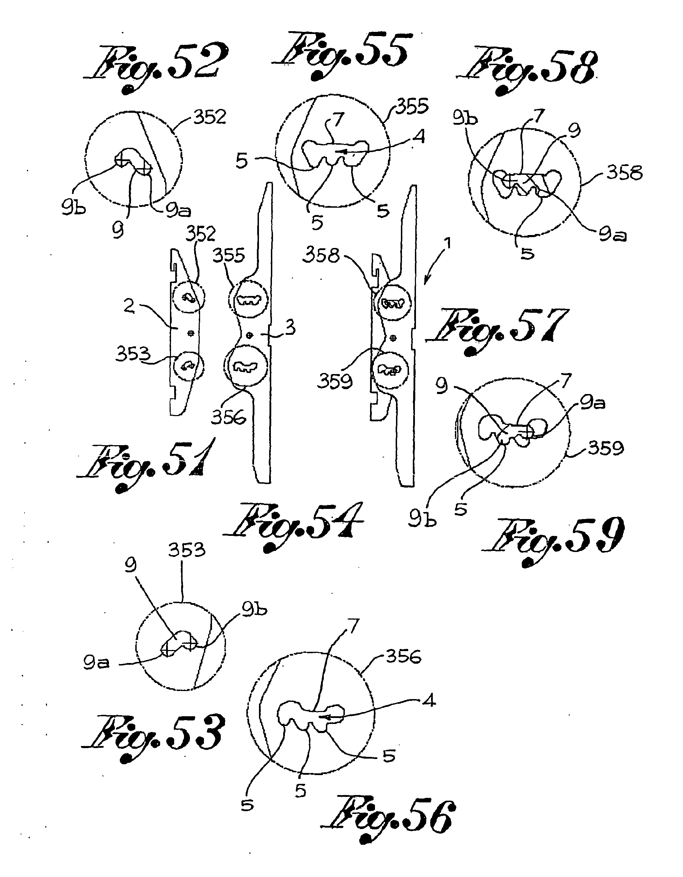

Suitably, the lock-release portion 9 is shaped as an upturned V: such upturned V exhibits a first bottom end 9a which substantially extends up to the height of the engagement grooves 5 and the other end or second bottom end 9b which extends up to the development height of the disengagement portion 7 (Figures 51 to 59).

The first relative moving direction evidently develops from bottom end 9b toward bottom end 9a.

With reference to the embodiment illustrated in the Figures, each of the two portions 1a and 1b comprises a pair of shoulders: on each shoulder there are respectively defined at least one engagement portion 4 and at least one lock-release portion 9.

According to a preferred embodiment, at portion 1a the mounting system 1 exhibits two engagement portions 4 arranged one at the bottom and the other at the top relative to the oscillation axis 100 or at opposite sides relative to the oscillation axis 100.

Similarly to what described hereinbefore, each of the two engagement portions 4 is provided with at least two engagement grooves 5 for a respective locking element 6 supported by the other portion 1b of the mounting system 1.

By the relative movement, along a first moving direction, between the two portions 1a and 1b about the oscillation axis 100, a respective locking element 6 is suitable for engaging, alternately, in a sequence and in a steady and automatic manner, an engagement groove 5 of the two engagement portions 4.

It is clear that it is possible to double the engagement grooves 5 along a same oscillation portion, optionally ensuring greater possibility of angular adjustment between the two portions 1a and 1b.

The operation of the mounting device according to the present finding clearly follows from the above description.

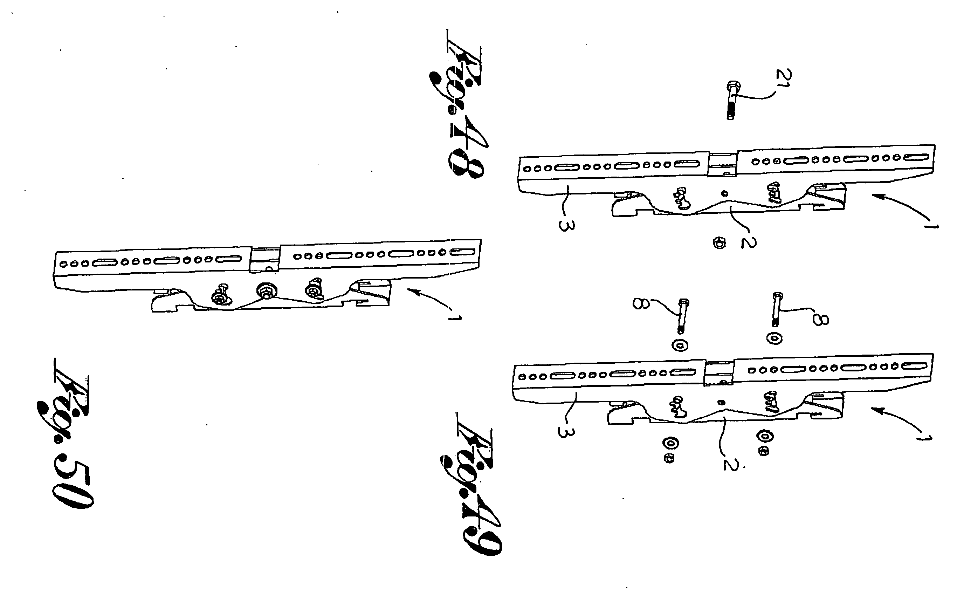

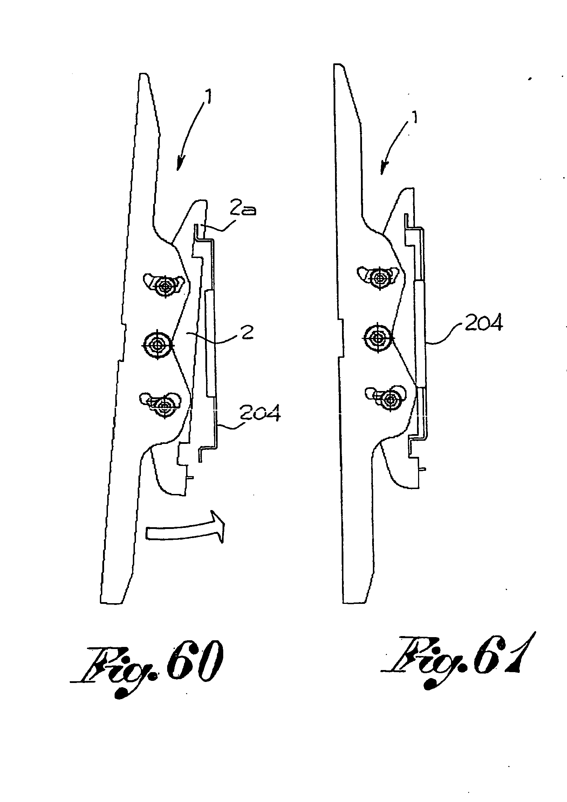

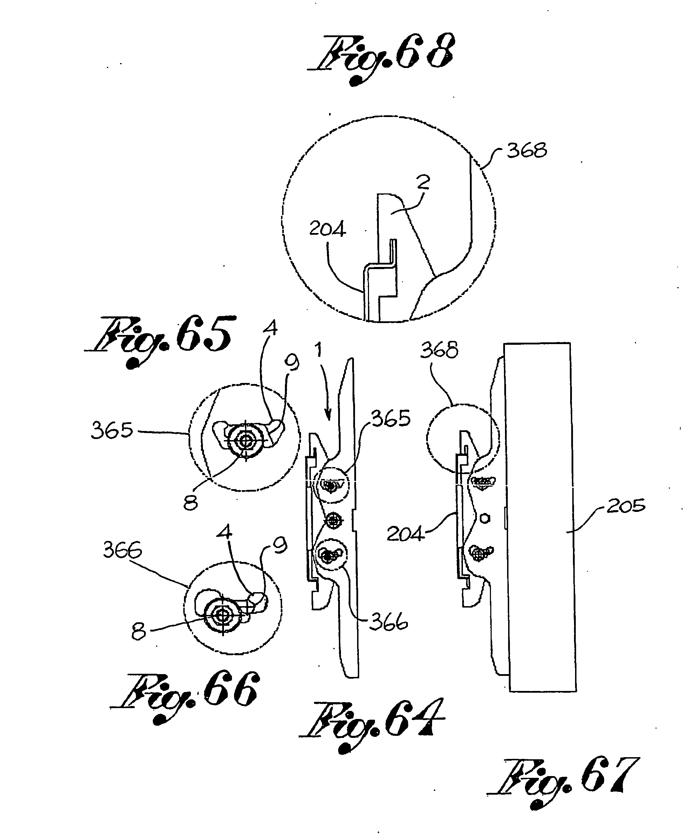

In particular, in the first place the element to be supported (such as a plasma television set 205) is fixed to the mounting structure 3 and the mounting support 2 is fixed to the wall, for example by arranging a support interface 204 thereinbetween (Figures 46 to 49 and 60 to 67).

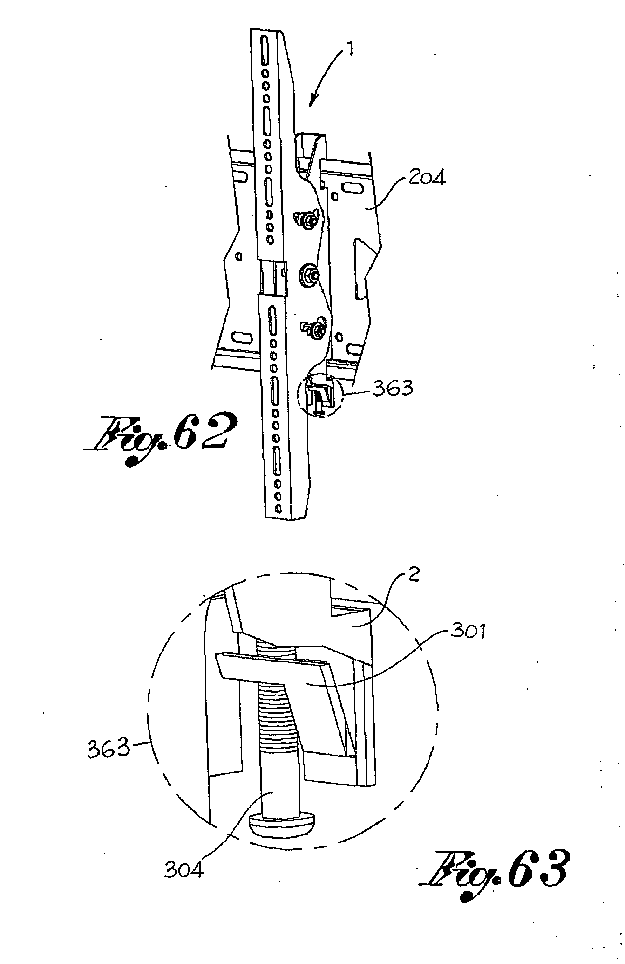

In accordance with an embodiment, the mounting support 2 is fixed to a support interface 204 by removable locking means 304 (such as a screw) seated in a threaded seat of a shelf 301, provided in the mounting support 2, facing the support interface 204 (Figures 62 and 63).

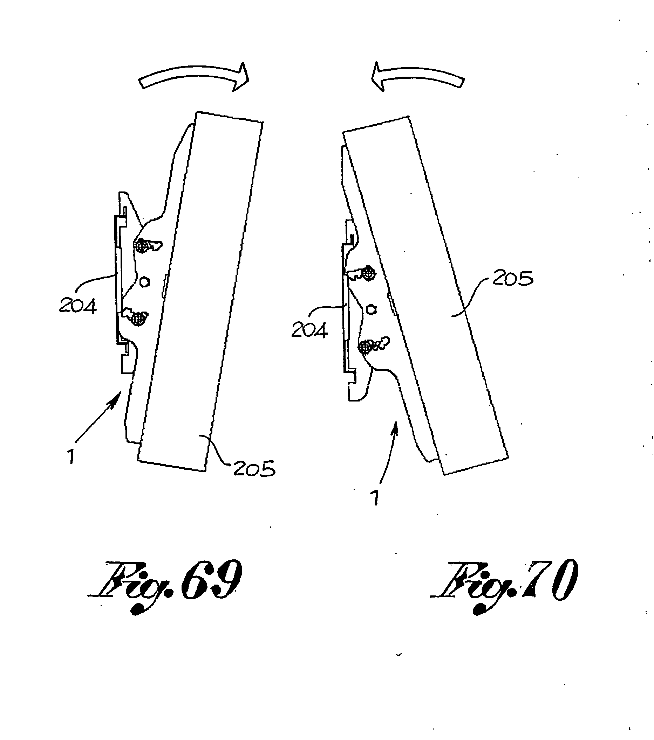

If one wants to adjust the tilt of the television set, with reference to the embodiment illustrated in the Figures, a force is exerted on the television set itself to move it about the oscillation axis in counterclockwise direction relative to the mounting support (Figure 70).

The relative movement imparted determines the disengagement of the locking element 6 from the engagement groove 5 following the raising of the height of the locking element 6 itself, which in this step slides along the lock-release portion 9 shaped as an upturned V and, in particular, along the rectilinear portion extending from the bottom end 9a to the top.

Continuing with the rotation in counterclockwise direction of the mounting structure 3, when another engagement groove 5 is underneath the locking element 6, by gravity the locking element 6 itself is moved at the same time downwards, and in particular, with the first engagement element 8a thereof inside such engagement groove 5 and with the second engagement element 8b thereof at the bottom end 9a of the lock-release portion 9.

The passage of the locking element 6 from one engagement groove 5 to that arranged downstream along the first moving direction occurs without the need of acting on the locking element 6 itself but simply moving the mounting structure 3 in such direction relative to the mounting support 2.

Once the engagement groove 5 located more downstream has been reached, continuing with the rotation of the mounting structure 3 along the first moving direction, determines a sliding of the locking element 6 along the entire rectilinear portion extending from the bottom end 9a to the top, to then move down again along the shorter portion to move at end 9b arranged at a higher height than the inlet of the engagement grooves 5. In this way, by moving the mounting structure 3 in clockwise direction relative to the mounting support 2, the locking element 6 slides along the sliding portion 7 defined on the engagement portion 4 until it reaches the other end of the engagement portion 4. In fact, once such other end has been reached, due to the relative movement with the edge defining such other end, the locking element 6 moves upwards along the rectilinear portion extending from the bottom end 9b to the top to then move down again towards end 9b and towards an engagement groove 5 (Figure 69).

All the features of the finding, hereinbefore indicated as advantageous, suitable or the like, may even be lacking or be replaced with equivalent ones.

Several changes and variations can be made to the finding thus conceived, all falling within the scope of the inventive concept.

In the practice, it has been found that in all the embodiments, the finding has achieved the task and the objects thereof.

In the practice, the materials used as well as the sizes, can be whatever, according to the requirements.

Moreover, all details can be replaced with other technically equivalent elements.

Where the technical features in the claims are followed by numerical references and/or codes, said numerical references and/or codes have been added only for the purpose of increasing the intelligibility of the claims and thus, such numerical references and/or codes have no effect on the scope of each element identified by said numerical references and/or codes only by way of an example.

In accordance with further embodiments, reference numeral 201 globally denotes a mounting system for a device 205, such as a television screen, a monitor, a CRT monitor, an LCD monitor, a flat screen and the like.

The mounting system 201, in particular, is a tilting mounting and support system of device 205, for angularly orientating device 205 itself as desired.

The mounting system 201 comprises at least one mounting structure 202 suitable for integrally connecting said device 205 to said mounting system 201 in a selectively removable manner.

The mounting structure 202 comprises at least first coupling means that allow an oscillation of said mounting structure 202 about an axis X.

Moreover, the mounting structure 202 comprises at least second coupling means that determine a plurality of predetermined positions.

According to the present invention, said mounting system 201 further comprises at least one mounting support 203 for integrally fixing said mounting system 201 to a support interface 204, in a selectively removable manner.

Support 203 comprises at least first coupling counter-means suitable for cooperating with said first coupling means for coupling said support 203 to said mounting structure 202 and for allowing said oscillation of said mounting structure 202.

Moreover, support 203 comprises at least second coupling counter-means suitable for cooperating with said second coupling means for selectively defining a predetermined angular position of said mounting structure 202 relative to said support 203.

According to an embodiment of the present invention, the mounting system 201 also comprises the support interface 204.

Thus, preferably, the support interface 204 exhibits mounting apertures 221 for integrally connecting in a selectively removable manner said support interface 204 to a flat surface, such as a vertical and/or horizontal flat surface, a wall, a partition the like, for example by fixing means, such as screw means, bolts, hooks and the like.

Preferably, said first coupling means comprise at least first through holes 223.

According to a preferred embodiment, the first through holes 223 are arranged centrally in the mounting structure 202 and reciprocally aligned, or with the central axis in common.

Alternatively, the first through holes 223 are arranged laterally in the mounting structure 202, to change the oscillation range, or the tilting angle, of the mounting structure 202 relative to support 203.

Preferably, moreover, said second coupling means comprise a plurality of balance seats 213.

By balance seats 213 it is meant regions or portions of the mounting structure 202 which, in cooperation with said second coupling counter-means, form a plurality of steady and safe angular positions between support 203 and the mounting structure 202 wherein device 205 is in steady balance relative to the mounting system 201 itself.

Moreover, said second coupling means comprise at least one slot 206 that defines said seats 213.

According to a preferred embodiment of the invention, seats 213 are composed of tips 209, or teeth, in a sequence with each other and continuously jointed.

Tips 209 exhibit a substantially smooth and chamfered profile for allowing the sliding, for example by rolling, of the positioning element 210.

According to an aspect of the present invention, slot 206 is a through groove, such as an arched groove or a circular groove or a through guide with rectilinear tilted planes.

Favourably, slot 206 has a substantially curvilinear pattern.

Alternatively, slot 206 has a substantially rectilinear pattern.

Favourably, slot 206 spatially restricts said oscillation of said mounting structure 202 relative to said support 203.

For example, the oscillation is restricted within an arc comprised between 0° and 20°.

In other words, slot 206 defines a restricted and predetermined succession of said seats 213.

Favourably, said first coupling counter-means comprise at least second through holes 224.

According to an embodiment, the second through holes 224 are obtained centrally in support 203 and have the central axis in common, or they are aligned or coaxial.

Moreover, the second through holes 224 are aligned, or coaxial, to the first through holes 223, when support 203 and the mounting structure 202 are properly coupled.

Alternatively, the second through holes 224 are obtained laterally in support 203.

Moreover, said first coupling counter-means comprise at least one rotation element 211.

The rotation element 211 is seated in the first and second through holes 223 and 224 when support 203 is coupled to the mounting structure 22, so as to allow a reciprocal rotation of the latter about the rotation element 211.

Preferably, the rotation element 211 defines a fulcrum about which the mounting structure 202 oscillates relative to support 203.

According to a preferred embodiment, said second coupling counter-means comprise at least one positioning element 210.

According to a preferred embodiment, the mounting structure 202 comprises said plurality of balance seats 213 and is connected to said support 203 so as to allow the oscillation about said axis X for defining said angular position of the mounting structure 202 relative to said support 203.

Moreover, the mounting structure 202 can be selectively positioned, relative to support 203, in at least one of said plurality of relative predetermined angular balance positions between said mounting structure 202 and said support 203.

Each of the angular balance positions can be obtained by the positioning element 210 which selectively engages in at least one of the balance seats 213.

In other words, the positioning element 210 can be geometrically coupled in a selective manner to each of the plurality of seats 213.

In yet other words, the positioning element 210 restricts and selectively locks the oscillation of the mounting structure 202 relative to support 203, defining a succession of steady relative angular positions between the mounting structure 202 and support 203.

Preferably, said positioning element 210 is a positioning pin.

According to a preferred embodiment, said positioning pin 210 has a substantially elongated section, said positioning pin 210 exhibiting at least one flat face 225.

Preferably, moreover, the positioning pin 210 has a substantially oval section.

Favourably, the positioning pin 210 exhibits two opposite flat faces 225 obtained, for example, by deformation by compression of the positioning pin 210, for example in a press.

Preferably, the section of the positioning pin 210 has a larger dimension, suitable for being seated between two corresponding and facing seats 213 and a smaller dimension, suitable for allowing the passage of said positioning pin 210 between two corresponding and facing tips 209 in said slot 206, or the distance between two corresponding and facing tips 209 in slot 206 is greater than the smaller dimension of the section of the positioning pin 210 and moreover, it is smaller than the larger dimension of the section of the positioning pin 210.

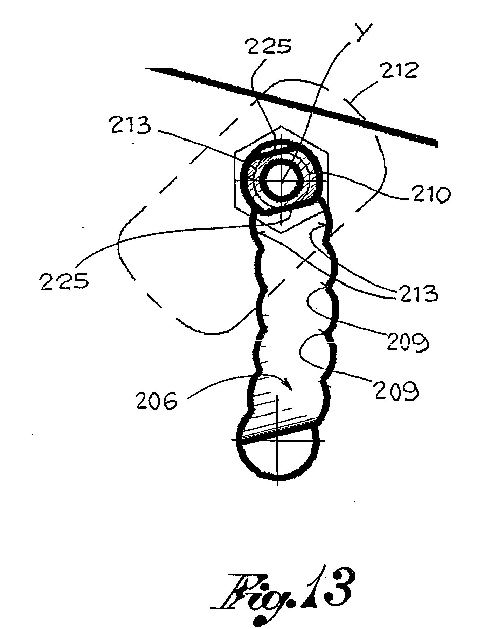

Thus, the positioning pin 210 engages seat 213 (figure 13) when the larger dimension thereof is fully seated between the two seats 213, or it is geometrically coupled to seats 213; in this case, the mounting system 201 is in engaged position.

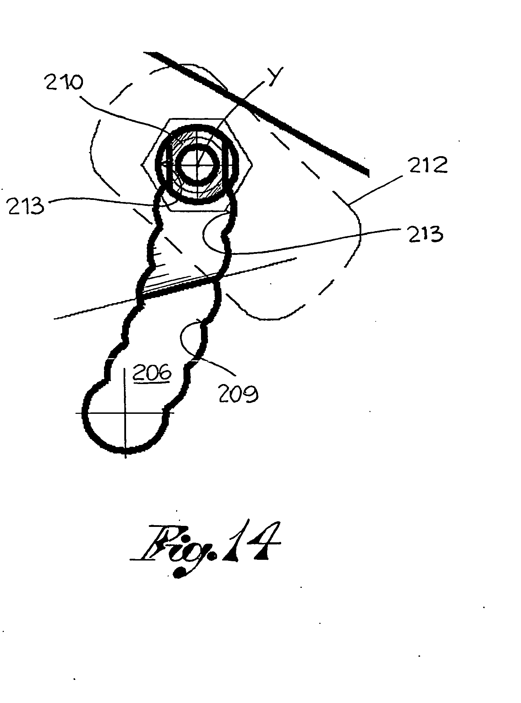

When the positioning pin 210 is rotated relative to an axis Y thereof so that it is not coupled to seats 213 anymore, the smaller dimension thereof can pass through the two facing tips 209 (figure 14); in this way, the mounting system 201 is in disengaged position.

According to an alternative embodiment, the positioning pin 210 has a substantially elliptical section.

Favourably, therefore, each of said seats 213 has a shape suitable for geometrically coupling with said positioning pin 210.

Thus, each of said seats 213, for example, has a shape substantially at least partly ellipsoidal or oval, so as to geometrically couple with said positioning pin 210 with elliptical or oval section.

In accordance with a preferred embodiment of the present invention, the mounting structure 202 exhibits two side plates 208 or side walls, suitable for reinforcing the mounting structure 202.

Preferably, each plate 208 exhibits slot 206.

Preferably, the side plates 208 are connected by a hooking plate 207 suitable for associating to said device 205 for the tilting thereof.

Plates 208 preferably have a rectilinear bottom profile suitable for being connected, for example by welding, to the hooking plate 207 and a further top profile comprising two broken lines at the ends of the plates, between which there is provided a projection obtained by a further broken line.

Preferably, the hooking plate 207 exhibits hooking holes 220 for the selectively removable hooking and fixing of said mounting structure 202 to said device 205, for example by selectively removable fixing means, such as screw means, bolts, hooks and the like.

The hooking holes 220, moreover, increase the flexibility of the mounting structure 202 when it is associated to device 205.

Favourably, each of said seats 213 is suitable for seating the positioning pin 210 for defining a balance position between said mounting structure 202 and said support 203.

In accordance with a preferred embodiment, the rotation element 211 is a rotation pin that effectively defines said rotation axis X about which said mounting structure 202 can rotate, or oscillate or be tilted, relative to said support 203.

Preferably, support 203 exhibits two side wings 214.

Favourably, the two side wings 214 are connected by a spacer plate 215, for example welded thereto.

Preferably, each of said wings 214 exhibits at a first end a hook 216 or a tab, substantially shaped as a "U", which exhibits an undercut for the sliding hooking to a top rail 218 of said support interface 204.

Hooks 216, in fact, engages astride of the top rail 218.

Moreover, each of said side wings 214 exhibits at a second end thereof coupling and stopping means that define a flange system 217, which is provided with at least one undercut, for the sliding association to a bottom rail 219 of said support interface 204, so as to form also a safety system for preventing the extraction of support 203 from the support interface 204.

The flange system 217 is substantially composed of an end of wing 214 with substantially rectangular shape and of an end of the further corresponding wing 214, which exhibits a rounded pattern and extending by a length greater than the rectangular end.

Once hook 216 engages the top end of the support interface 204 where the top rail 218 is provided, the flange system 217 is in contact with the bottom rail 219.

In this way, device 205 can be re-positioned laterally sliding along the top rail 218 and the bottom rail 219.

Favourably, the rectangular end exhibits a threaded through hole for seating fixing means, such as screw means, for engaging the support interface 204.

According to a preferred embodiment, each of the side wings 214 exhibits a profile between hook 216 and the flange system 217 comprising for example three consecutive rectilinear edges.

Favourably, moreover, support 203 is seated between said side plates 208, that is, the distance between the side wings, defined by the spacer plate 215 is less than the distance between plates 208, in turn defined by the width of the mounting plate 207.

Thus, support 203 is preferably coupled to said mounting structure 202 by said rotation pin 211.

In fact, the rotation pin 211 is seated in the first through holes 223 obtained on said side plates 208 and in the second through holes 224 obtained on said side wings 214 and screwed by bolt means 222, for preventing the extraction of the rotation pin 211 and thus the disconnection of support 203 and of the mounting structure 202.

In fact, the rotation pin 211 and the positioning pin 210 extend transversally relative to said mounting structure 202 and to said support 203, passing respectively inside said first through holes 223 and said second through holes 224.

Thus, the mounting structure 202 is in steady relative position relative to said support 203 when the positioning pin 210 is fully seated in, or geometrically coupled with, one of said seats 213.

Moreover, the mounting structure 202 is in unsteady position relative to said support 203 when said positioning pin 210 is not seated in one of said seats 213, or is disconnected from seat 213.

In fact, the positioning pin 210 rotates about axis Y thereof and at the same time, moves from said steady position, following the perimeter of slot 206 to move from a first seat 213 to an adjacent seat 213 and at the same time said mounting structure 202 rotates, or tilts or oscillates, relative to said support 203, about axis X.

Favourably, the positioning pin 210 changes from said steady position to said unsteady position and vice versa by a rotation substantially of about 90° about axis Y thereof, thanks to the fact that the smaller dimension of the section of the positioning pin 210 is smaller than the distance between tips 209.

Favourably, the passage of the positioning pin 210 from a first seat 213 to an adjacent seat 213 defines a passage from said first steady relative position to a further steady relative position of the mounting structure 202 relative to said support 203.

Favourably, the steady relative position is a steady relative angular position of said mounting structure 202 relative to said support 203.

According to an aspect of the present invention, the steady relative position is a tilted position of said mounting structure 202 relative to said support 203.

As already explained, according to the present invention, the angular position of said mounting structure 202 relative to said support 203 defines an angle comprised in a range between 0° and 20°.

According to a preferred embodiment, the positioning element 210 is manoeuvrable, or controllable, by a gripping means 212 such as a knob or a lever, suitable for providing a twisting torque to said positioning element 210, for the rotation thereof and for selectively coupling and disconnecting the positioning pin 210 to seats 213.

In other words, the hooking system 201 substantially acts as a rotating cam, wherein a twisting torque is imparted to the positioning pin 210 for the rotation thereof about axis Y, and as a consequence this causes the movement of pin 210 in a subsequent seat 213 and thus a rotation about pin 211 of the mounting system 201, for the variation of the relative angular position between support 203 and mounting structure 202.

According to a preferred embodiment, the hooking or mounting system 201 is provided with a plurality of hooking structures 202 fixed to a device 205 and associated to corresponding supports 203; the latter are hooked to the rails of the support interface 204.

Favourably, therefore, the hooking system 201 exhibits for example two pairs of hooking structures 202 fixed to a device 205 and associated to the corresponding supports 203.

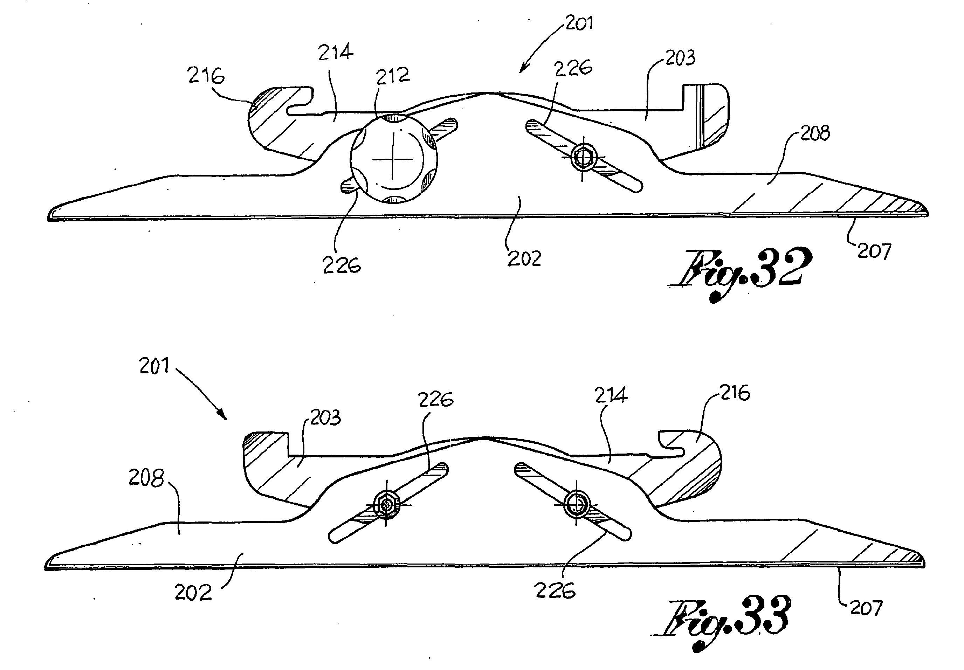

According to an optional embodiment, the mounting system 201 provides for the first and second coupling means to comprise two slots that define two guides with tilted planes 226, inside which the first coupling counter-means slide, for defining an infinite number of steady positions into the slots, such as sliding pins; one of these sliding pins may be even integrated with knob 212 with a fixing screw for locking device 205 in one of the desired steady positions; in this case, the centre of rotation about which the mounting structure 202 oscillates relative to support 203 defines a virtual rotation axis external to the mounting system 201 (figures 32 and 33).

Favourably, the hooking system 201 is made of a metal material, for example steel.

Alternatively, the hooking system 201 can be made of an appropriate polymeric material.

Advantageously, by the mounting system 201, device 205 is positioned in a plurality of predetermined positions, for example allowing the tilt thereof to be adjusted relative to the wall or to the partition, operating on the knob.

In fact, it is advantageous to apply a low twisting torque to the positioning pin 210 by knob 212, to rotate it so as to disconnect it from seat 213 wherein it is seated.

Afterwards, the positioning pin 210 is easily moved and coupled to the desired new balance seat, thus obtaining the desired angular position of device 205.

According to a further advantageous aspect thereof, a single rotation pin 211 is required for coupling the mounting structure 202 to support 203, thus allowing considerable cost and time saving.

Advantageously, the mounting system 201 is provided with a pair of mounting structures associated to corresponding supports that can be easily adjusted by a single operator who manoeuvres the positioning pins 210 at the same time through knobs 212.

Therefore, a single operator can adjust the angular position of device 205, changing the tilt thereof as desired and in a safe manner.

In fact, each balance seat 213 is adjacent to at least one further balance seat, thus ensuring the positioning safety of device 205 and preventing sudden movements or too wide oscillations of the device itself.

Advantageously, moreover, with the mounting system 201, device 205, which can weight between 0 and 100 Kg, is kept in a steady position.

In fact, thanks to the fact that the rotation pin 211 defines an effective and concrete rotation axis X which passes through the mounting system 201, the device weight is released on the mounting system 201, and thus on the wall or partition, in a more effective manner, allowing a considerable capacity, and allowing the use of smaller thicknesses than the standard ones, with significant advantages on the material in terms of cost and time.

Advantageously, moreover, by hooks 206 and the flange system 217, device 205 can be easily re-positioned laterally along the rails of the support interface 204.

According to a further advantageous aspect, moreover, device 205 does not move from the steady position thereof when, for example, it undergoes an accidental shock, since the positioning pin 210 is steadily coupled into seats 213.

It is clear that a man skilled in the art may make several variations and changes to the mounting system for a device, such as a television screen, a monitor, a CRT monitor, an LCD monitor, a flat screen and the like according to the present invention in order to meet specific and incidental needs.

## Claims

1. A mounting system (1; 201) for a device (205) such as a household appliance, a monitor, a television screen, a flat screen, said mounting system (1; 201) being suitable for allowing a predetermined oscillation of said device (205) about an axis (100; X), said axis (100; X) passing through said mounting system (1; 201), for the positioning in one of a plurality of predetermined balance positions of said device (205),
said mounting system (1; 201) comprising:
- at least one mounting structure (1a, 3; 202) suitable for integrally connecting said device (205) to said mounting system (1; 201) in a selectively removable manner;
- at least one mounting support (1b, 2; 203) for integrally fixing in use said mounting system (1; 201) to a support interface (204) in a selectively removable manner, said mounting support (2; 203) being pivoted along said axis (100; X) to said mounting structure (3; 202) so that said mounting structure (3; 202) is tilting relative to said mounting support by an oscillation about said axis (100; X);
said mounting structure (1a, 3; 202) and mounting support (1b, 2; 203) are two portions;
wherein said mounting structure (1a, 3, 202) comprises coupling means comprising at least one engagement portion (4, 206) suitable for allowing said oscillation of said mounting structure (3; 202) about said axis (100; X) wherein said engagement portion (4, 206) defines at least two engagement grooves (5, 213) for a locking element (6, 210) supported by the other portion (1b, 2, 203) of said mounting system (1, 201), along a first relative moving direction between said two portions (1a, 1b) about said oscillation axis (100, X), said locking element (6, 210) being suitable for engaging in a sequence in a steady manner said at least two engagement grooves (5, 213) while along the other relative moving direction said locking element (6, 210) being suitable for moving in disengagement along said engagement portion (4, 206) relative to said at least two engagement grooves (5, 213),
**characterised by** that
said locking element (6) comprises a pin element (8) exhibiting a first engagement element (8a) slidingly associated to said at least one engagement portion (4) defined on one of the two portions (1a) and a second engagement element (8b) slidingly supported by a lock-release portion (9) defined on the other portion (1b) of said mounting system (1) and arranged substantially facing said engagement portion (4).

2. A mounting system (1) according to claim 1, wherein said at least one engagement portion (4) extends along a circumference portion centred at said oscillation axis (100).

3. A mounting system (1) according to one or more of the previous claims, wherein said at least one engagement portion (4) comprises a respective sliding portion (7) and
wherein said sliding portion (7) during use is arranged on top of said at least two engagement grooves (5).

4. A mounting system according to one or more of the previous claims, wherein said lock-release portion (9) is shaped as an upturned V, said upturned V exhibits a bottom end (9a) substantially extending up to the height of said at least two engagement grooves (5) and the other bottom end (9b) extending up to the height of said disengagement portion (7).

5. A mounting system (1) according to one or more of the previous claims, wherein each of said two portions (1a, 1b) comprises a pair of shoulders, on each shoulder there being defined, respectively, said at least one engagement portion (4) and at least one lock-release portion (9).

6. A mounting system (1) according to one or more of the previous claims, wherein at one of said two portions (1a) there are provided two engagement portions (4), each defining at least two engagement grooves (5) for a respective locking element (6) supported by the other portion (1b) of said mounting system (1), along a first relative moving direction between said two portions (1a, 1b) about said oscillation axis (100) said locking element (6) being suitable for engaging, alternately, in a sequence in a steady manner an engagement groove (5) of the two engagement portions (4).

7. A mounting system (1) according to any one of the previous claims, comprising:
- at least one mounting structure (3; 202) suitable for integrally connecting said device (205) to said mounting system (1; 201) in a selectively removable manner and comprising:
- at least first coupling means that allow an oscillation of said mounting structure (3, 202) about an axis (100, X);
- at least second coupling means that determine a plurality of predetermined positions;
said mounting system (1, 201)) further comprising:
- at least one mounting support (2, 203) for integrally fixing in use said mounting system (1, 201) to a support interface (204), in a selectively removable manner and comprising:
- at least first coupling counter-means suitable for cooperating with said first coupling means for coupling said mounting support (2, 203) to said mounting structure (3, 202) and for allowing said oscillation of said mounting structure (3, 202);
- at least second coupling couter-means suitable for cooperating with said second coupling means for selectively defining a predetermined angular position of said mounting structure (3, 202) relative to said mounting support (2, 203).

8. A mounting system (1, 201) according to any one of the previous claims, wherein said mounting support (2, 203) comprises at least second coupling counter-means suitable for cooperating with said engagement portion (4, 206) for selectively defining a predetermined angular position of said mounting structure (3, 202) relative to said mounting support (2, 203), for obtaining one of said plurality of predetermined balance positions of said device (205).

9. A mounting system (1, 201) according to any one of the previous claims, wherein said first coupling means comprise first through holes (223) and
wherein said second coupling means comprise a plurality of balance seats (5, 213).

10. A mounting system (1, 201) according to any one of the previous claims, wherein said first coupling counter-means comprise at least second through holes (224) and at least one rotation element (211).

11. A mounting system (1, 201) according to any one of the previous claims, wherein said second coupling counter-means comprise at least one positioning element seats (6, 210).

12. A mounting system (1, 201) according to any one of the previous claims, wherein said mounting structure (3, 202) comprises said plurality of balance seats (5, 213) and wherein said mounting structure (3, 202) and said mounting support (2, 203) are connected so as to allow said oscillation about said axis (100, X) for defining said angular position of the mounting structure (3, 202) relative to said mounting support (2, 203), wherein, moreover, said mounting structure (3, 202) can be selectively positioned in a plurality of relative predetermined angular balance positions between said mounting structure (3, 202) and said mounting support (2, 203) and wherein each of said plurality of angular balance positions is obtainable by said positioning element (6, 210) which selectively engages in at least one of said balance seats (5, 2013).

13. A mounting system (1, 201) according to any one of the previous claims, wherein said mounting structure (3, 202) exhibits two side plates (208), each exhibiting a slot (4, 206) wherein there is obtained said plurality of seats (5, 213), which limits said oscillation of said mounting structure (3, 202) relative to said mounting support (2, 203).

14. A mounting system (1, 201) according to any one of the previous claims, wherein each of said seats (213) is suitable for seating said positioning pin (6, 210) for defining a balance position between said mounting structure (3, 202) and said mounting support (2, 203).

15. A mounting system (1, 201) according to any one of the previous claims, wherein said positioning pin (210) has a substantially oval section, exhibiting two opposite flat faces (225) or
wherein said positioning pin (210) has a substantially elliptical section.

16. A mounting system (1, 201) according to any one of the previous claims, wherein each of said seats (213) has a shape substantially at least partly ellipsoidal or oval, so as to geometrically couple with said positioning pin (210) with elliptical or oval section.

17. A mounting system (1, 201) according to any one of the previous claims, wherein said rotation element (21, 211) is a rotation pin that defines said rotation axis (100, X) about which said mounting structure (3, 202) can rotate relative to said mounting support (2, 203).

18. A mounting system (1, 201) according to any one of the previous claims, wherein said mounting structure (3, 202) is in steady position relative to said mounting supports (2, 203) when said positioning pin (6, 210) is fully seated in one of said seats (5, 213) and is in unsteady position when said positioning pin (6, 210) is not seated in one of said seats (5, 213).

19. A mounting system (1, 201) according to any one of the previous claims, wherein said positioning pin (6, 210) rotates about an axis (Y) thereof and at the same time, moves from said steady position following the perimeter of the slot (4, 206) to move from a first seat (5, 213) to an adjacent seat (5, 213) and wherein moreover, at the same time said mounting structure (3, 202) rotates relative to said mounting support (2, 203) about said axis (100, X).

20. A mounting system (1, 201) according to any one of the previous claims, wherein said positioning element (210) can be manoeuvred by a gripping means (212) such as a knob or a lever, suitable for providing a twisting torque to said positioning element (210).

21. A mounting system (1, 201) according to any one of the previous claims, wherein each of said wings (214) exhibits at a first end a hook (2a, 216) for the sliding hooking to a top rail (218) of said support interface (204).

22. A mounting system according to anyone of the proceeding claim, wherein the mounting support (2) is fixed in use to a support interface (204) by removable locking-means (304) - such as a screw - seated in use in a threaded seat of a shelf (301), provided in the mounting support (2), facing the support interface (204).

23. A device (205), such as a television screen, a monitor, a CRT monitor, an LCD monitor, a flat screen and the like, integrally connected in a selectively removable manner to a mounting system (1, 201) according to any one of the previous claims.

## Patentansprüche

1. Montagesystem (1; 201) für eine Vorrichtung (205) wie zum Beispiel ein Haushaltsgerät, ein Monitor, ein Fernsehbildschirm, ein Flachbildschirm, wobei das Montagesystem (1; 201) dafür geeignet ist, um eine vorbestimmte Auslenkung der Vorrichtung (205) um eine Achse (100; X) zu erlauben, wobei die Achse (100; X) durch das Montagesystem (1; 201) hindurch verläuft, für das Positionieren in einer von einer Mehrzahl von vorbestimmten Gleichgewichtspositionen der Vorrichtung (205),
wobei das Montagesystem (1; 201) umfasst:
wenigstens eine Montagestruktur (1a, 3; 202), die dafür geeignet ist, um die Vorrichtung (205) an dem Montagesystem (1; 201) integral in einer selektiv entfernbaren Weise zu verbinden;
wenigstens eine Montagehalterung (1b, 2; 203), um im Betrieb das Montagesystem (1; 201) integral an einer Halterungsschnittstelle (204) in einer selektiv entfernbaren Weise zu fixieren,
wobei die Montagehalterung (2; 203) entlang der Achse (100; X) zur Montagestruktur (3; 202) geschwenkt ist, derart dass die Montagestruktur (3; 202) relativ zur Montagehalterung durch eine Auslenkung um die Achse (100; X) geneigt ist;
wobei die Montagestruktur (1a, 3; 202) und die Montagehalterung (1b, 2; 203) zwei Abschnitte sind;
wobei die Montagestruktur (1a, 3, 202) Kopplungsmittel umfasst, die wenigstens einen Eingriffsabschnitt (4, 206) umfassen, welcher dafür geeignet ist, die Auslenkung der Montagestruktur (3; 202) um die Achse (100; X) zu erlauben,
wobei der Eingriffsabschnitt (4, 206) wenigstens zwei Eingriffsnuten (5, 213) für ein Verriegelungselement (6, 210), das durch den anderen Abschnitt (1b, 2, 203) des Montagesystems (1, 201) gehalten ist, entlang einer ersten relativen Bewegungsrichtung zwischen den zwei Abschnitten (1a, 1b) um die Auslenkungsachse (100, X) definiert,
wobei das Verriegelungselement (6, 210) dafür geeignet ist,
aufeinanderfolgend mit den wenigstens zwei Eingriffsnuten (5, 213) stabil in Eingriff zu treten, während entlang der anderen relativen Bewegungsrichtung das Verriegelungselement (6, 210) dafür geeignet ist,
um sich entlang des Eingriffsabschnitts (4, 206) relativ zu den wenigstens zwei Eingriffsnuten (5, 213) in loslösender Weise zu bewegen,
**dadurch gekennzeichnet,**
**dass** das Verriegelungselement (6) ein Stiftelement (8) umfasst, welches ein erstes Eingriffselement (8a) aufweist, welches verschiebbar dem wenigstens einen auf einem der zwei Abschnitte (1a) definierten Eingriffsabschnitt (4) zugeordnet ist, und ein zweites Eingriffselement (8b) aufweist, welches durch einen Entriegelungsabschnitt (9) verschiebbar gehalten ist, welcher auf dem anderen Abschnitt (1b) des Montagesystems (1) definiert ist und im Wesentlichen dem Eingriffsabschnitt (4) zugewandt angeordnet ist.

2. Montagesystem (1) nach Anspruch 1,
wobei der wenigstens eine Eingriffsabschnitt (4) sich entlang eines Umfangsabschnitts erstreckt, der auf die Auslenkungsachse (100) zentriert ist.

3. Montagesystem (1) nach einem oder mehreren der vorhergehenden Ansprüche,
wobei der wenigstens eine Eingriffsabschnitt (4) einen jeweiligen Gleitabschnitt (7) umfasst, und
wobei der Gleitabschnitt (7) im Betrieb oben auf den wenigstens zwei Eingriffsnuten (5) angeordnet ist.

4. Montagesystem nach einem oder mehreren der vorhergehenden Ansprüche,
wobei der Entriegelungsabschnitt (9) als ein umgekehrtes V geformt ist,
wobei das umgekehrte V ein unteres Ende (9a) aufweist, das sich im Wesentlichen bis zur Höhe der wenigstens zwei Eingriffsnuten (5) erstreckt, und das andere untere Ende (9b) sich bis zur Höhe des Loslösungsabschnitts (7) erstreckt.

5. Montagesystem (1) nach einem oder mehreren der vorhergehenden Ansprüche,
wobei jeder der zwei Abschnitte (1a, 1b) ein Paar von Schultern umfasst, wobei auf jeder Schulter jeweils der wenigstens eine Eingriffsabschnitt (4) und der wenigstens eine Entriegelungsabschnitt (9) definiert sind.

6. Montagesystem (1) nach einem oder mehreren der vorhergehenden Ansprüche,
wobei auf einem der zwei Abschnitte (1a) zwei Eingriffsabschnitte (4) vorgesehen sind, wobei jeder wenigstens zwei Eingriffsnuten (5) für ein jeweiliges Verriegelungselement (6) definiert, das durch den anderen Abschnitt (1b) des Montagesystems (1) gehalten ist,
wobei entlang einer ersten relativen Bewegungsrichtung zwischen den zwei Abschnitten (1a, 1b) um die Auslenkungsachse (100) das Verriegelungselement (6) dafür geeignet ist, abwechselnd aufeinanderfolgend mit einer Eingriffsnut (5) der zwei Eingriffsabschnitte (4) in einer stabilen Weise in Eingriff zu treten.

7. Montagesystem (1) nach einem der vorhergehenden Ansprüche, umfassend:
wenigstens eine Montagestruktur (3; 202), die dafür geeignet ist, um die Vorrichtung (205) an dem Montagesystem (1; 201) integral in einer selektiv entfernbaren Weise zu verbinden und umfassend:
wenigstens erste Kopplungsmittel, welche eine Auslenkung der Montagestruktur (3, 202) um eine Achse (100, X) erlauben;
wenigstens zweite Kopplungsmittel, welche eine Mehrzahl von vorbestimmten Positionen festlegen;
wobei das Montagesystem (1, 201) ferner umfasst:
wenigstens eine Montagehalterung (2, 203), um im Betrieb das Montagesystem (1, 201) integral an einer Halterungsschnittstelle (204) in einer selektiv entfernbaren Weise zu fixieren und umfassend:
wenigstens erste Kopplungsgegenmittel, die dafür geeignet sind, um mit den ersten Kopplungsmittel zusammen zu wirken, um die Montagehalterung (2, 203) an der Montagestruktur (3, 202) zu koppeln, und
um die Auslenkung der Montagestruktur (3, 202) zu erlauben; wenigstens zweite Kopplungsgegenmittel, die dafür geeignet sind, um mit den zweiten Kopplungsmittel zusammen zu wirken, um eine vorbestimmte Winkelposition der Montagestruktur (3, 202) relativ zur Montagehalterung (2, 203) selektiv zu definieren.

8. Montagesystem (1, 201) nach einem der vorhergehenden Ansprüche, wobei die Montagehalterung (2, 203) wenigstens zweite Koppelungsgegenmittel umfasst, die dafür geeignet sind, um mit dem Eingriffsabschnitt (4, 206) zusammen zu wirken, um eine vorbestimmte Winkelposition der Montagestruktur (3, 202) relativ zur Montagehalterung (2, 203) selektiv zu definieren, um eine von der Mehrzahl von vorbestimmten Gleichgewichtspositionen der Vorrichtung (205) zu erhalten.

9. Montagesystem (1, 201) nach einem der vorhergehenden Ansprüche, wobei die ersten Kopplungsmittel erste Durchgangslöcher (223) umfassen, und wobei die zweiten Kopplungsmittel eine Mehrzahl von Gleichgewichtsauflagern (5, 213) umfassen.

10. Montagesystem (1, 201) nach einem der vorhergehenden Ansprüche, wobei die ersten Kopplungsgegenmittel wenigstens zweite Durchgangslöcher (224) und wenigstens ein Rotationselement (211) umfassen.

11. Montagesystem (1, 201) nach einem der vorhergehenden Ansprüche, wobei die zweiten Kopplungsgegenmittel wenigstens ein Positionierungselementauflager (6, 210) umfassen.

12. Montagesystem (1, 201) nach einem der vorhergehenden Ansprüche, wobei die Montagestruktur (3, 202) die Mehrzahl von Gleichgewichtsauflagern (5, 213) umfasst, und
wobei die Montagestruktur (3, 202) und die Montagehalterung (2, 203) derart verbunden sind, um die Auslenkung um die Achse (100, X) zur Definition der Winkelposition der Montagestruktur (3, 202) relativ zur Montagehalterung (2, 203) zu erlauben,
wobei darüber hinaus die Montagestruktur (3, 202) in einer Mehrzahl von relativ vorbestimmten Winkelgleichgewichtspositionen zwischen der Montagestruktur (3, 202) und der Montagehalterung (2, 203) selektiv positioniert werden kann, und
wobei jede aus der Mehrzahl von Winkelgleichgewichtspositionen durch das Positionierungselement (6, 210) erhalten werden kann, welches in wenigstens eines der Gleichgewichtsauflager (5, 2013) selektiv eingreift.

13. Montagesystem (1, 201) nach einem der vorhergehenden Ansprüche, wobei die Montagestruktur (3, 202) zwei Seitenplatten (208) aufweist, die jeweils einen Schlitz (4, 206) aufweisen,
wobei die Mehrzahl von Auflagern (5, 213) dort erhalten wird, was die Auslenkung der Montagestruktur (3, 202) relativ zur Montagehalterung (2, 203) einschränkt.

14. Montagesystem (1, 201) nach einem der vorhergehenden Ansprüche, wobei jeder der Auflager (213) dafür geeignet ist, als Auflage für den Positionierungsstift (6, 210) zu dienen, um eine Gleichgewichtsposition zwischen der Montagestruktur (3, 202) und der Montagehalterung (2, 203) zu definieren.

15. Montagesystem (1, 201) nach einem der vorhergehenden Ansprüche, wobei der Positionierungsstift (210) einen im Wesentlichen ovalen Schnitt aufweist, der zwei entgegengesetzte flache Seiten (225) aufweist, oder wobei der Positionierungsstift (210) einen im Wesentlichen elliptischen Schnitt aufweist.

16. Montagesystem (1, 201) nach einem der vorhergehenden Ansprüche, wobei jeder der Auflager (213) eine Form aufweist, die im Wesentlichen wenigstens teilweise ellipsoidisch oder oval ist, um geometrisch mit dem Positionierungsstift (210) mit elliptischem oder ovalem Schnitt zu koppeln.

17. Montagesystem (1, 201) nach einem der vorhergehenden Ansprüche, wobei das Rotationselement (21, 211) ein Rotationsstift ist, das die Rotationsachse (100, X) definiert, um welche die Montagestruktur (3, 202) relativ zur Montagehalterung (2, 203) rotieren kann.

18. Montagesystem (1, 201) nach einem der vorhergehenden Ansprüche, wobei die Montagestruktur (3, 202) relativ zur Montagehalterung (2, 203) in einer stabilen Position ist, wenn der Positionierungsstift (6, 210) völlig in einem der Auflager (5, 213) gelagert ist, und in einer instabilen Position ist, wenn der Positionierungsstift (6, 210) nicht in einem der Auflager (5, 213) gelagert ist.

19. Montagesystem (1, 201) nach einem der vorhergehenden Ansprüche, wobei der Positionierungsstift (6, 210) sich um eine eigene Achse (Y) dreht und gleichzeitig aus der stabilen Position, dem Umfang der Nut (4, 206) folgend, sich bewegt, um sich von einem ersten Auflager (5, 213) zu einem benachbarten Auflager (5, 213) zu bewegen, und
wobei darüber hinaus zur gleichen Zeit die Montagestruktur (3, 202) relativ zur Montagehalterung (2, 203) um die Achse (100, X) rotiert.

20. Montagesystem (1, 201) nach einem der vorhergehenden Ansprüche, wobei das Positionierungselement (210) durch ein Greifmittel (212), wie zum Beispiel einen Knopf oder einen Hebel, manövriert werden kann, das dafür geeignet ist, ein Drehmoment dem Positionierungselement (210) bereitzustellen.

21. Montagesystem (1, 201) nach einem der vorhergehenden Ansprüche, wobei jeder der Flügel (214) an einem ersten Ende einen Haken (2a, 216) aufweist, zum Einhaken auf gleitende Weise an einem oberen Rahmen (218) der Halterungsschnittstelle (204).

22. Montagesystem nach einem der vorhergehenden Ansprüche,
wobei die Montagehalterung (2) im Betrieb an einer Halterungsschnittstelle (204) durch lösbare Verriegelungsmittel (304) - wie zum Beispiel eine Schraube-fixiert ist, die im Betrieb in einem gewindehaltigen Auflager eines Gestells (301) gelagert sind, das in der Montagehalterung (2) der Halterungsschnittstelle (204) zugewandt vorgesehen ist.

23. Vorrichtung (205) wie zum Beispiel ein Fernsehbildschirm, ein Monitor, ein CRT Monitor, ein LCD Monitor, ein Flachbildschirm und dergleichen, welche mit einem Montagesystem (1; 201) nach einem der vorhergehenden Ansprüche in einer selektiv entfernbaren Weise integral verbunden ist.

## Revendications

1. Système de montage (1 ; 201) pour un dispositif (205) tel qu'un appareil électroménager, un moniteur, un écran de télévision, un écran plat, ledit système de montage (1 ; 201) étant approprié pour permettre une oscillation prédéterminée dudit dispositif (205) autour d'un axe (100 ; X), ledit axe (100 ; X) traversant ledit système de montage (1 ; 201), pour le positionnement dans l'une d'une pluralité de positions d'équilibre prédéterminées dudit dispositif (205), ledit système de montage (1 ; 201) comprenant :
- au moins une structure de montage (1a, 3 ; 202) appropriée pour relier d'un seul tenant ledit dispositif (205) audit système de montage (1 ; 201) d'une manière sélectivement amovible ;
- au moins un support de montage (1b, 2 ; 203) pour fixer d'un seul tenant, en utilisation, ledit système de montage (1 ; 201) à une interface de support (204) d'une manière sélectivement amovible, ledit support de montage (2 ; 203) pivotant le long dudit axe (100 ; X) par rapport à ladite structure de montage (3 ; 202) de sorte que ladite structure de montage (3 ; 202) s'incline par rapport audit support de montage par une oscillation autour dudit axe (100 ; X) ;
ladite structure de montage (1a, 3 ; 202) et le support de montage (1b, 2 ; 203) sont deux parties ;
dans lequel ladite structure de montage (1a, 3, 202) comprend des moyens d'accouplement comprenant au moins une partie de mise en prise (4, 206) appropriée pour permettre ladite oscillation de ladite structure de montage (3 ; 202) autour dudit axe (100 ; X), dans lequel ladite partie de mise en prise (4, 206) définit au moins deux rainures de mise en prise (5, 213) pour un élément de blocage (6, 210) supporté par l'autre partie (1b, 2, 203) dudit système de montage (1, 201), le long d'une première direction de déplacement relatif entre lesdites deux parties (1a, 1b) autour dudit axe d'oscillation (100, X), ledit élément de blocage (6, 210) étant approprié pour venir en prise en une séquence d'une manière stable avec lesdites au moins deux rainures de mise en prise (5, 213) tandis que, le long de l'autre direction de déplacement relatif, ledit élément de blocage (6, 210) est approprié pour se déplacer le long de ladite partie de mise en prise (4, 206) pour se séparer desdites au moins deux rainures de mise en prise (5, 213),
**caractérisé en ce que**
ledit élément de blocage (6) comprend un élément formant broche (8) présentant un premier élément de mise en prise (8a) associé de manière coulissante à ladite au moins une partie de mise en prise (4) définie sur l'une des deux parties (1a) et un deuxième élément de mise en prise (8b) supporté de manière coulissante par une partie de libération de blocage (9) définie sur l'autre partie (1b) dudit système de montage (1) et agencée sensiblement face à ladite partie de mise en prise (4).

2. Système de montage (1) selon la revendication 1, dans lequel ladite au moins une partie de mise en prise (4) s'étend le long d'une partie de circonférence centrée autour dudit axe d'oscillation (100).

3. Système de montage (1) selon une ou plusieurs des revendications précédentes, dans lequel ladite au moins une partie de mise en prise (4) comprend une partie coulissante (7) respective, et dans lequel ladite partie coulissante (7), en utilisation, est agencée au-dessus desdites au moins deux rainures de mise en prise (5).

4. Système de montage selon une ou plusieurs des revendications précédentes, dans lequel ladite partie de libération de blocage (9) a la forme d'un V renversé, ledit V renversé présente une extrémité inférieure (9a) s'étendant sensiblement jusqu'à la hauteur desdites au moins deux rainures de mise en prise (5) et l'autre extrémité inférieure (9b) s'étendant jusqu' à la hauteur de ladite partie de séparation (7).

5. Système de montage (1) selon une ou plusieurs des revendications précédentes, dans lequel chacune desdites deux parties (1a, 1b) comprend une paire d'épaulements, ladite au moins une partie de mise en prise (4) et ladite au moins une partie de libération de blocage (9) étant respectivement définies sur chaque épaulement.

6. Système de montage (1) selon une ou plusieurs des revendications précédentes, dans lequel, au niveau de l'une desdites deux parties (1a), deux parties de mise en prise (4) sont prévues, définissant chacune d'au moins deux rainures de mise en prise (5) pour un élément de blocage (6) respectif supporté par l'autre partie (1b) dudit système de montage (1), le long d'une première direction de déplacement relatif entre lesdites deux parties (1a, 1b) autour dudit axe d'oscillation (100), ledit élément de blocage (6) étant approprié pour venir en prise, alternativement, en une séquence d'une manière stable avec une gorge de mise en prise (5) des deux parties de mise en prise (4).

7. Système de montage (1) selon l'une quelconque des revendications précédentes, comprenant :
- au moins une structure de montage (3 ; 202) appropriée pour relier d'un seul tenant ledit dispositif (205) audit système de montage (1 ; 201) d'une manière sélectivement amovible et comprenant :
- au moins des premiers moyens d'accouplement qui permettent une oscillation de ladite structure de montage (3, 202) autour d'un axe (100, X) ;
- au moins des deuxièmes moyens d'accouplement qui déterminent une pluralité de positions prédéterminées ;
ledit système de montage (1, 201) comprenant en outre :
- au moins un support de montage (2, 203) pour fixer d'un seul tenant, en utilisation, ledit système de montage (1, 201) à une interface de support (204), d'une manière sélectivement amovible et comprenant :
- au moins des premiers contre-moyens d'accouplement appropriés pour coopérer avec lesdits premiers moyens d'accouplement pour accoupler ledit support de montage (2, 203) à ladite structure de montage (3, 202) et pour permettre ladite oscillation de ladite structure de montage (3, 202) ;
- au moins des deuxièmes contre-moyens d'accouplement appropriés pour coopérer avec lesdits deuxièmes moyens d'accouplement pour définir de manière sélective une position angulaire prédéterminée de ladite structure de montage (3, 202) par rapport audit support de montage (2, 203).

8. Système de montage (1, 201) selon l'une quelconque des revendications précédentes, dans lequel ledit support de montage (2, 203) comprend au moins des deuxièmes contre-moyens d'accouplement appropriés pour coopérer avec ladite partie de mise en prise (4, 206) pour définir de manière sélective une position angulaire prédéterminée de ladite structure de montage (3, 202) par rapport audit support de montage (2, 203), pour obtenir l'une de ladite pluralité de positions d'équilibre prédéterminées dudit dispositif (205).

9. Système de montage (1, 201) selon l'une quelconque des revendications précédentes, dans lequel lesdits premiers moyens d'accouplement comprennent des premiers trous traversants (223), et dans lequel lesdits deuxièmes moyens d'accouplement comprennent une pluralité de sièges d'équilibre (5, 213).

10. Système de montage (1, 201) selon l'une quelconque des revendications précédentes, dans lequel lesdits premiers contre-moyens d'accouplement comprennent au moins des deuxièmes trous traversants (224) et au moins un élément de rotation (211).

11. Système de montage (1, 201) selon l'une quelconque des revendications précédentes, dans lequel lesdits deuxièmes contre-moyens d'accouplement comprennent au moins un siège d'élément de positionnement (6, 210).

12. Système de montage (1, 201) selon l'une quelconque des revendications précédentes, dans lequel ladite structure de montage (3, 202) comprend ladite pluralité de sièges d'équilibre (5, 213), et dans lequel ladite structure de montage (3, 202) et ledit support de montage (2, 203) sont reliés de manière à permettre ladite oscillation autour dudit axe (100, X) pour définir ladite position angulaire de la structure de montage (3, 202) par rapport audit support de montage (2, 203), dans lequel, de plus, ladite structure de montage (3, 202) peut être positionnée de manière sélective dans une pluralité de positions d'équilibre angulaires prédéterminées relatives entre ladite structure de montage (3, 202) et ledit support de montage (2, 203), et dans lequel chacune de ladite pluralité de positions d'équilibre angulaires peut être obtenue par ledit élément de positionnement (6, 210) qui vient en prise de manière sélective dans au moins l'un desdits sièges d'équilibre (5, 213).

13. Système de montage (1, 201) selon l'une quelconque des revendications précédentes, dans lequel ladite structure de montage (3, 202) présente deux plaques latérales (208), chacune présentant une fente (4, 206), dans lequel ladite pluralité de sièges (5, 213) est obtenue, qui limite ladite oscillation de ladite structure de montage (3, 202) par rapport audit support de montage (2, 203).

14. Système de montage (1, 201) selon l'une quelconque des revendications précédentes, dans lequel chacun desdits sièges (213) est approprié pour recevoir ladite broche de positionnement (6, 210) pour définir une position d'équilibre entre ladite structure de montage (3, 202) et ledit support de montage (2, 203).

15. Système de montage (1, 201) selon l'une quelconque des revendications précédentes, dans lequel ladite broche de positionnement (210) a une section sensiblement ovale, présentant deux faces plates (225) opposées, ou dans lequel ladite broche de positionnement (210) a une section sensiblement elliptique.

16. Système de montage (1, 201) selon l'une quelconque des revendications précédentes, dans lequel chacun desdits sièges (213) a une forme sensiblement au moins partiellement ellipsoïdale ou ovale, de manière à s'accoupler géométriquement avec ladite broche de positionnement (210) avec une section elliptique ou ovale.

17. Système de montage (1, 201) selon l'une quelconque des revendications précédentes, dans lequel ledit élément de rotation (21, 211) est une broche de rotation qui définit ledit axe de rotation (100, X) autour duquel ladite structure de montage (3, 202) peut tourner par rapport audit support de montage (2, 203).

18. Système de montage (1, 201) selon l'une quelconque des revendications précédentes, dans lequel ladite structure de montage (3, 202) est dans une position stable par rapport audit support de montage (2, 203) lorsque ladite broche de positionnement (6, 210) est entièrement reçue dans l'un desdits sièges (5, 213) et est dans une position instable lorsque ladite broche de positionnement (6, 210) n'est pas reçue dans l'un desdits sièges (5, 213).

19. Système de montage (1, 201) selon l'une quelconque des revendications précédentes, dans lequel ladite broche de positionnement (6, 210) tourne autour d'un axe (Y) de celle-ci et se déplace en même temps de ladite position stable en suivant le périmètre de la fente (4, 206) pour se déplacer d'un premier siège (5, 213) vers un siège (5, 213) adjacent, et dans lequel, de plus, en même temps, ladite structure de montage (3, 202) tourne par rapport audit support de montage (2, 203) autour dudit axe (100, X) .

20. Système de montage (1, 201) selon l'une quelconque des revendications précédentes, dans lequel ledit élément de positionnement (210) peut être manoeuvré par des moyens de préhension (212) tels qu'un bouton ou un levier, appropriés pour appliquer un couple de torsion audit élément de positionnement (210).

21. Système de montage (1, 201) selon l'une quelconque des revendications précédentes, dans lequel chacune desdites ailes (214) présente, à une première extrémité, un crochet (2a, 216) pour l'accrochage coulissant à un rail supérieur (218) de ladite interface de support (204).

22. Système de montage selon l'une quelconque des revendications précédentes, dans lequel le support de montage (2) est fixé, en utilisation, à une interface de support (204) par des moyens de blocage amovibles (304), tels qu'une vis, reçus, en utilisation, dans un siège fileté d'une plaque (301), prévue dans le support de montage (2), face à l'interface de support (204).

23. Dispositif (205), tel qu'un écran de télévision, un moniteur, un moniteur à CRT, un moniteur à LCD, un écran plat et similaire, relié d'un seul tenant d'une manière sélectivement amovible à un système de montage (1, 201) selon l'une quelconque des revendications précédentes.
